(19) Europäisches Patentamt / European Patent Office / Office européen des brevets

(11) **EP 4 432 592 B1**

(12) **EUROPEAN PATENT SPECIFICATION**

(45) Date of publication and mention
of the grant of the patent:
**25.02.2026  Bulletin 2026/09**

(21) Application number: **22918384.3**

(22) Date of filing: **16.12.2022**

(51) International Patent Classification (IPC):
*H04W 72/02* *(2009.01)*    *H04W 72/40* *(2023.01)*
*H04W 72/541* *(2023.01)*   *H04W 92/18* *(2009.01)*

(52) Cooperative Patent Classification (CPC):
**H04W 72/02;** H04W 72/40; H04W 72/541;
H04W 92/18

(86) International application number:
**PCT/CN2022/139693**

(87) International publication number:
**WO 2023/130939 (13.07.2023 Gazette 2023/28)**

(54) **RESOURCE SELECTION METHOD AND APPARATUS**

RESSOURCENAUSWAHLVERFAHREN UND -VORRICHTUNG

PROCÉDÉ ET APPAREIL DE SÉLECTION DE RESSOURCES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **04.01.2022  CN 202210001047
21.02.2022  CN 202210159063**

(43) Date of publication of application:
**18.09.2024  Bulletin 2024/38**

(73) Proprietor: **Huawei Technologies Co., Ltd.
Shenzhen, Guangdong 518129 (CN)**

(72) Inventors:
• **WU, Yue
Shenzhen, Guangdong 518129 (CN)**

• **LI, Xueru
Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(56) References cited:
WO-A1-2020/173536    WO-A1-2021/007686
CN-A- 109 219 015    CN-A- 111 246 426
CN-A- 112 997 551    CN-A- 113 747 497
US-A1- 2020 389 218

## Description

### TECHNICAL FIELD

This application relates to the field of communication, and in particular, to a resource selection method and apparatus.

### BACKGROUND

In the 3rd generation partnership project (3rd generation partnership project, 3GPP) sidelink (sidelink, SL) release (Release, Rel) 16, two resource allocation modes (Mode) are defined: Mode 1 and Mode 2.

In Mode 1, an access network device (for example, a base station) allocates an SL resource to a terminal to perform SL transmission.

In Mode 2, a sending terminal selects an SL resource for data transmission through channel sensing and selection (sensing and selection). Specifically, the sending terminal listens to, in a sensing window, sidelink control information (sidelink control information, SCI) sent by another terminal, and learns of a location of a reserved resource of the another terminal, to determine an available resource in a selection window.

Generally, the available resource determined by the sending terminal in the selection window does not overlap a resource reserved by another terminal. However, power leakage may occur on the available resource determined by the sending terminal when the another terminal performs transmission on the reserved resource of the another terminal. As a result, data transmission of the sending terminal is interfered with, and data transmission reliability is reduced.

WO2021/007686A1 discloses a method for resource exclusion and selection in new radio sidelink communication. The method includes performing within a sidelink sensing period a resource sensing procedure, determining an initial candidate resource set within a resource selection window based on a sensing result from performing the resource sensing procedure, excluding a sidelink resource from the initial candidate resource set to form an updated candidate resource set, and performing selection of a sidelink resource from the updated candidate resource set.

WO2020/173536A1 discloses a sidelink communication device comprising a processor configured to select a radio resource from a plurality of candidate radio resources. At least one candidate radio resource comprises a plurality of time resources, in particular contiguous time slots. The processor is configured to determine an expected received signal quality of the at least one candidate radio resource on the basis of an energy to be transmitted in the plurality of time resources and select the radio resource on the basis of the expected received signal quality.

## SUMMARY

The present invention is defined by the independent claims. In the following, parts of the description and drawings referring to examples which do not necessarily comprise all features of the invention as currently claimed are not represented as embodiments of the invention but as examples useful for understanding the embodiments of the invention. Embodiments of this application provides a resource selection method and apparatus, so that interference on a resource that is determined by a terminal and that is used for data transmission is small or does not exist, thereby improving transmission reliability.

According to a first aspect, a resource selection method is provided. The method may be performed by a first terminal, or may be performed by a component of a first terminal, for example, a processor, a chip, or a chip system of the first terminal; or may be implemented by a logical module or software that can implement all or some functions of the first terminal. The method includes: determining a candidate resource set, where the candidate resource set does not include a first resource. Interference power on a second resource associated with the first resource is greater than or equal to a first threshold. A periodic extension resource of the second resource overlaps a resource set corresponding to the first resource, and the periodic extension resource of the second resource is determined based on the second resource and a first period of a second terminal. A time domain location of the second resource overlaps a time domain location of a third resource, and a frequency domain location of the second resource does not overlap a frequency domain location of the third resource. Interference power on the second resource is determined based on power that a signal carried on the third resource leaks on the second resource. The third resource is a resource in a sensing window, and the signal carried on the third resource is a PSCCH of the second terminal and/or a PSSCH scheduled by the PSCCH.

Based on this solution, when the terminal determines a resource used for data transmission, because the periodic extension resource of the second resource is determined based on the second resource and the first period of the second terminal, and the time domain location of the second resource overlaps the time domain location of the third resource, a periodic resource (that is, the periodic extension resource of the third resource determined based on the third resource and the first period of the second terminal) reserved by the second terminal overlaps a time domain location of the periodic extension resource of the second resource. Therefore, on the periodic extension resource of the second resource, interference caused by the PSCCH and/or the PSSCH transmitted by the second terminal on the periodic extension resource of the third resource exists. In this case, if the periodic extension resource of the second resource overlaps the first resource or a periodic extension resource of the first resource, interference exists on the first resource. In this scenario, the candidate resource determined by the first terminal does not include the first resource, so that the first terminal can be prevented from performing transmission by using the first resource with poor quality or the periodic extension resource of the first resource, thereby improving data transmission reliability.

According to a second aspect, a resource selection method is provided. The method may be performed by a first terminal, or may be performed by a component of a first terminal, for example, a processor, a chip, or a chip system of the first terminal; or may be implemented by a logical module or software that can implement all or some functions of the first terminal. The method includes: determining a candidate resource set, where the candidate resource set includes a first resource; and when a target condition is met, deleting the first resource from the candidate resource set. The target condition includes: interference power on the second resource is greater than or equal to a first threshold. A periodic extension resource of the second resource overlaps a resource set corresponding to the first resource, and the periodic extension resource of the second resource is determined based on the second resource and a first period of a second terminal. A time domain location of the second resource overlaps a time domain location of a third resource, and a frequency domain location of the second resource does not overlap a frequency domain location of the third resource. Interference power on the second resource is determined based on power that a signal carried on the third resource leaks on the second resource. The third resource is a resource in a sensing window, and the signal carried on the third resource is a PSCCH of the second terminal and/or a PSSCH scheduled by the PSCCH. For technical effect brought by the second aspect, refer to technical effect brought by the first aspect. Details are not described herein again.

With reference to the first aspect or the second aspect, in a possible design, the resource set corresponding to the first resource includes the first resource and/or periodic extension resource of the first resource, and the periodic extension resource of the first resource is determined based on the first resource and a second period of the first terminal.

With reference to the first aspect or the second aspect, in a possible design, that interference power on the second resource is determined based on power that a signal carried on the third resource leaks on the second resource includes: The interference power on the second resource is determined based on the power that the signal carried on the third resource leaks on the second resource, and signal received power of a PSCCH of a third terminal carried on the second resource and/or signal received power of a PSSCH scheduled by the PSCCH.

Based on this possible design, because the signal received power of the PSCCH of the third terminal carried on the second resource and/or the signal received power of the PSSCH scheduled by the PSCCH is co-channel interference caused by the third terminal to the first terminal, the interference power on the second resource may include non-co-channel interference of the second terminal and co-channel interference of the first terminal. In other words, in this application, interference on the second resource is determined from two aspects: the non-co-channel interference and the co-channel interference, thereby improving accuracy of resource selection.

With reference to the first aspect or the second aspect, in a possible design, that the periodic extension resource of the second resource is determined based on the second resource and a first period of a second terminal includes: the periodic extension resource of the second resource is determined based on the second resource, the first period of the second terminal, and a third period of the third terminal, where the second resource is used to carry the PSCCH of the third terminal and/or the PSSCH scheduled by the PSCCH.

With reference to the first aspect or the second aspect, in a possible design, the power that the signal carried on the third resource leaks on the second resource is signal received power on a first channel state information interference measurement CSI-IM resource, and the first CSI-IM resource is located on the second resource.

Based on the possible design, the terminal can obtain an accurate interference power value by measuring signal received power on a CSI-IM resource, to avoid excluding a resource with good quality from the candidate resource set.

With reference to the first aspect or the second aspect, in a possible design, the method further includes: receiving first configuration information from the third terminal, where the first configuration information is used to configure the first CSI-IM resource on the second resource; or receiving second configuration information from a network device, where the second configuration information is used to configure a periodic CSI-IM resource, a period of the periodic CSI-IM resource is N slots, the periodic CSI-IM resource includes the first CSI-IM resource, and N is a positive integer.

With reference to the first aspect or the second aspect, in a possible design, the CSI-IM resource is located on a symbol other than a guard symbol, and the CSI-IM resource is not used for PSSCH transmission or PSCCH transmission.

Based on this possible design, the CSI-IM resource is not used for PSSCH transmission or PSCCH transmission, so that all power measured on the CSI-IM resource is interference power, thereby improving accuracy of interference power measurement.

With reference to the first aspect or the second aspect, in a possible design, the power that the signal carried on the third resource leaks on the second resource is determined based on signal received power on the third resource and an in-band emission mask, and the signal received power on the third resource is determined based on signal received power of the PSCCH of the second terminal and/or signal received power of the PSSCH scheduled by the PSCCH.

Based on this possible design, the interference power on the second resource may be estimated based on the signal received power on the third resource and the in-band emission mask, so that complexity of obtaining the interference power on the second resource can be reduced.

With reference to the first aspect or the second aspect, in a possible design, the signal received power on the third resource is the signal received power of the PSCCH of the second terminal; or the signal received power on the third resource is the signal received power of the PSSCH scheduled by the PSCCH; or the signal received power on the third resource is a maximum value of the signal received power of the PSCCH of the second terminal and the signal received power of the PSSCH scheduled by the PSCCH; or the signal received power on the third resource is a minimum value of the signal received power of the PSCCH of the second terminal and the signal received power of the PSSCH scheduled by the PSCCH; or the signal received power on the third resource is an average value of the signal received power of the PSCCH of the second terminal and the signal received power of the PSSCH scheduled by the PSCCH.

With reference to the first aspect or the second aspect, in a possible design, the method further includes: receiving indication information from a fourth terminal, where the indication information indicates the interference power on the second resource.

Based on this possible design, the fourth terminal may assist the first terminal in determining the interference power on the second resource, thereby reducing implementation complexity and energy consumption of the first terminal.

With reference to the first aspect or the second aspect, in a possible design, the second terminal and the first terminal share a same sidelink resource pool, and/or a distance between the second terminal and the first terminal is less than or equal to a second threshold.

With reference to the first aspect or the second aspect, in a possible design, the first period of the second terminal is a period in which the second terminal reserves a resource.

With reference to the first aspect or the second aspect, in a possible design, the second period of the first terminal is a period in which the first terminal reserves a resource. The second period of the first terminal may be configured by using a higher layer parameter.

With reference to the first aspect or the second aspect, in a possible design, the third period of the third terminal is a period in which the third terminal reserves a resource.

According to a third aspect, a resource selection method is provided. The method may be performed by a fourth terminal, or may be performed by a component of a fourth terminal, for example, a processor, a chip, or a chip system of the fourth terminal; or may be implemented by a logical module or software that can implement all or some functions of the first terminal. The method includes: determining interference power on a second resource; and sending indication information to a first terminal, where the indication information indicates the interference power on the second resource. A time domain location of the second resource overlaps a time domain location of a third resource, a frequency domain location of the second resource does not overlap a frequency domain location of the third resource, the third resource is a resource in a sensing window, the interference power on the second resource is determined based on power that a signal carried on the third resource leaks on the second resource, and the signal carried on the third resource is a physical sidelink control channel PSCCH of the second terminal and/or a physical sidelink shared channel PSSCH scheduled by the PSCCH.

Based on this solution, the fourth terminal may determine the interference power on the second resource, and indicate the interference power on the second resource to the first terminal, so that the first terminal can select a resource based on the interference power on the second resource. This prevents the first terminal from performing transmission by using a resource with poor quality, thereby improving data transmission reliability.

In a possible design, that interference power on the second resource is determined based on power that a signal carried on the third resource leaks on the second resource includes: The interference power on the second resource is determined based on the power that the signal carried on the third resource leaks on the second resource, and signal received power of a PSCCH of a third terminal carried on the second resource and/or signal received power of a PSSCH scheduled by the PSCCH.

In a possible design, the power that the signal carried on the third resource leaks on the second resource is signal received power on a first channel state information interference measurement CSI-IM resource, and the first CSI-IM resource is located on the second resource.

In a possible design, the method further includes: receiving first configuration information from the third terminal, where the first configuration information is used to configure the first CSI-IM resource on the second resource; or receiving second configuration information from a network device, where the second configuration information is used to configure a periodic CSI-IM resource, a period of the periodic CSI-IM resource is N slots, the periodic CSI-IM resource includes the first CSI-IM resource, and N is a positive integer.

In a possible design, the CSI-IM resource is located on a symbol other than a guard symbol, and the CSI-IM resource is not used for PSSCH transmission or PSCCH transmission.

In a possible design, the power that the signal carried on the third resource leaks on the second resource is determined based on signal received power on the third resource and an in-band emission mask, and the signal received power on the third resource is determined based on signal received power of the PSCCH of the second terminal and/or signal received power of the PSSCH scheduled by the PSCCH.

In a possible design, the signal received power on the third resource is the signal received power of the PSCCH of the second terminal; or the signal received power on the third resource is the signal received power of the PSSCH scheduled by the PSCCH; or the signal received power on the third resource is a maximum value of the signal received power of the PSCCH of the second terminal and the signal received power of the PSSCH scheduled by the PSCCH; or the signal received power on the third resource is a minimum value of the signal received power of the PSCCH of the second terminal and the signal received power of the PSSCH scheduled by the PSCCH; or the signal received power on the third resource is an average value of the signal received power of the PSCCH of the second terminal and the signal received power of the PSSCH scheduled by the PSCCH.

According to a fourth aspect, a resource configuration method is provided. The method may be performed by a network device, or may be performed by a component of a network device, for example, a processor, a chip, or a chip system of the network device; or may be implemented by a logical module or software that can implement all or some functions of the network device. The method includes: generating second configuration information, and sending the second configuration information to a first terminal or a fourth terminal. The second configuration information is used to configure a periodic CSI-IM resource, where a period of the periodic CSI-IM resource is N slots, and N is a positive integer.

In a possible design, the CSI-IM resource is located on a non-guard symbol, and the CSI-IM resource is not used for PSSCH transmission or PSCCH transmission.

According to a fifth aspect, a resource selection method is provided. The method may be performed by a first terminal, or may be performed by a component of a first terminal, for example, a processor, a chip, or a chip system of the first terminal; or may be implemented by a logical module or software that can implement all or some functions of the first terminal. The method includes: determining a candidate resource set, where the candidate resource set does not include a fourth resource. Signal received power on a fifth resource associated with the fourth resource is greater than or equal to a third threshold. The fifth resource is a resource in a sensing window, and the fifth resource carries a physical sidelink control channel PSCCH of a second terminal and/or a physical sidelink shared channel PSSCH scheduled by the PSCCH. A time domain location of a periodic extension resource of the fifth resource overlaps a time domain location of a resource set corresponding to the fourth resource. The periodic extension resource of the fifth resource is determined based on the fifth resource and a first period of the second terminal. A spacing between a frequency domain location of the fifth resource and a frequency domain location of the fourth resource is less than a fourth threshold.

Based on this solution, when the terminal determines the candidate resource set, if the received power on the fifth resource in the sensing window is large, and the periodic extension resource of the fifth resource overlaps the time domain location of the resource set corresponding to the fourth resource, the candidate resource set does not include a fourth resource that has a small frequency domain spacing with the fifth resource, so that interference on a resource finally determined by the terminal for data transmission is small or does not exist, thereby improving data transmission reliability.

According to a sixth aspect, a communication apparatus is provided, configured to implement various methods. The communication apparatus may be the first terminal in the first aspect, the second aspect, or the fifth aspect, or an apparatus including the first terminal, or an apparatus included in the first terminal, such as a chip. Alternatively, the communication apparatus may be the network device in the fourth aspect, or an apparatus included in the network device, such as a chip. Alternatively, the communication apparatus may be the fourth terminal in the third aspect, or an apparatus including the fourth terminal, or an apparatus included in the fourth terminal, such as a chip. The communication apparatus includes a corresponding module, unit, or means (means) for implementing the method. The module, unit, or means may be implemented by hardware, software, or hardware executing corresponding software. The hardware or software includes one or more modules or units corresponding to functions.

In some possible designs, the communication apparatus may include a processing module. The processing module may be configured to implement a processing function in any one of the foregoing aspects and the possible implementations of the foregoing aspects. Further, the communication apparatus may further include a transceiver module. The transceiver module may also be referred to as a transceiver unit, and is configured to implement a sending function and/or a receiving function in any one of the foregoing aspects and any one of the possible implementations of the foregoing aspects. The transceiver module may include a transceiver circuit, a transceiver machine, a transceiver, or a communication interface.

In some possible designs, the transceiver module includes a sending module and/or a receiving module, configured to implement a sending function or a receiving function in any one of the foregoing aspects and any possible implementation of the foregoing aspect.

According to a seventh aspect, a communication apparatus is provided. The communication apparatus includes a processor and a memory. The memory is configured to store computer instructions. When the processor executes the instructions, the communication apparatus is enabled to perform the method according to any one of the aspects. The communication apparatus may be the first terminal in the first aspect, the second aspect, or the fifth aspect, or an apparatus including the first terminal, or an apparatus included in the first terminal, such as a chip. Alternatively, the communication apparatus may be the network device in the fourth aspect, or an apparatus included in the network device, such as a chip. Alternatively, the communication apparatus may be the fourth terminal in the third aspect, or an apparatus including the fourth terminal, or an apparatus included in the fourth terminal, such as a chip.

According to an eighth aspect, a communication apparatus is provided, including a processor and a communication interface, where the communication interface is configured to communicate with a module other than the communication apparatus, and the processor is configured to execute a computer program or instructions, so that the communication apparatus performs the method according to any one of the aspects. The communication apparatus may be the first terminal in the first aspect, the second aspect, or the fifth aspect, or an apparatus including the first terminal, or an apparatus included in the first terminal, such as a chip. Alternatively, the communication apparatus may be the network device in the fourth aspect, or an apparatus included in the network device, such as a chip. Alternatively, the communication apparatus may be the fourth terminal in the third aspect, or an apparatus including the fourth terminal, or an apparatus included in the fourth terminal, such as a chip.

According to a ninth aspect, a communication apparatus is provided, including at least one processor, where the processor is configured to execute a computer program or instructions stored in a memory, so that the communication apparatus performs the method according to any one of the aspects. The memory may be coupled to the processor, or may be independent of the processor. The communication apparatus may be the first terminal in the first aspect, the second aspect, or the fifth aspect, or an apparatus including the first terminal, or an apparatus included in the first terminal, such as a chip. Alternatively, the communication apparatus may be the network device in the fourth aspect, or an apparatus included in the network device, such as a chip. Alternatively, the communication apparatus may be the fourth terminal in the third aspect, or an apparatus including the fourth terminal, or an apparatus included in the fourth terminal, such as a chip.

According to a tenth aspect, a computer-readable storage medium is provided. The computer-readable storage medium stores a computer program or instructions, and when the computer program or the instructions are run on a communication apparatus, the communication apparatus is enabled to perform the method according to any one of the aspects.

According to an eleventh aspect, a computer program product including instructions is provided. When the computer program product runs on a communication apparatus, the communication apparatus is enabled to perform the method according to any one of the aspects.

According to a twelfth aspect, a communication apparatus (for example, the communication apparatus may be a chip or a chip system) is provided. The communication apparatus includes a processor, configured to implement a function in any aspect.

In some possible designs, the communication apparatus includes the memory, and the memory is configured to store necessary program instructions and data.

In some possible designs, when the apparatus is a chip system, the apparatus may include a chip, or may include a chip and another discrete component.

It may be understood that when the communication apparatus provided in any one of the sixth aspect to the twelfth aspect is a chip, a sending action/function of may be understood as output information, and a receiving action/function of may be understood as input information.

For technical effects brought by any design manner in the sixth aspect to the twelfth aspect, refer to technical effects brought by different design manners in the first aspect to the fifth aspect. Details are not described herein again.

According to a thirteenth aspect, a communication system is provided. The communication system includes the first terminal according to the foregoing aspects.

**BRIEF DESCRIPTION OF DRAWINGS**

FIG. 1 is a diagram of symbols occupied by a PSCCH and a PSSCH in one slot according to this application;

FIG. 2 is a diagram of resource reservation and selection according to this application;

FIG. 3 is a diagram of adjacent-channel interference according to this application;

FIG. 4 is a diagram of a structure of a communication system according to this application;

FIG. 5 is a diagram of a structure of a communication apparatus according to this application;

FIG. 6 is a schematic flowchart of a resource selection method according to this application;

FIG. 7 is a diagram of resource distribution according to this application;

FIG. 8 is another diagram of resource distribution according to this application;

FIG. 9 is a diagram of distribution of a CSI-IM resource according to this application;

FIG. 10 is a schematic flowchart of another resource selection method according to this application;

FIG. 11 is a schematic flowchart of still another resource selection method according to this application;

FIG. 12 is a diagram of a structure of a first terminal according to this application;

FIG. 13 is a diagram of a structure of a fourth terminal according to this application; and

FIG. 14 is a diagram of a structure of another communication apparatus according to this application.

## DESCRIPTION OF EMBODIMENTS

In the description of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one of a, b, or c may represent: a, b, c, a and b, a and c, b and c, and a and b and c, where a, b, and c may be singular or plural.

In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, in embodiments of this application, the word "exemplary" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments by using any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

In this application, unless otherwise specified, for same or similar parts in embodiments, refer to each other. In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment. The following implementations of this application are not intended to limit the protection scope of this application.

A sidelink (sidelink, SL) is different from an uplink (uplink) and a downlink (downlink), and is a new link technology introduced to support direct communication between devices. The SL is first introduced in a device to device (device to device, D2D) application scenario of the 3rd generation partnership project (3rd generation partnership project, 3GPP) release (Release, Rel) 12. Subsequently, a long term evolution (long term evolution, LTE) vehicle to everything (V2X) is developed in the 3GPP Rel. 14 and enhanced in the Rel. 15.

A V2X standard based on the fifth generation (fifth generation, 5G) new radio (new radio, NR) is developed in the 3GPP Rel. 16, and is enhanced in the 3GPP Rel. 17. The 3GPP Rel. 16 is mainly oriented to an application scenario of vehicle to everything, supports direct communication between vehicles, and meets a low-level service requirement of V2X. The 3GPP Rel. 17 enhances reliability of the SL, and further considers direct communication between power-limited devices like a handheld terminal, for example, direct communication between devices such as a mobile phone, a band, and a watch.

The 3GPP Rel. 16 defines two resource allocation modes for the SL: Mode 1 and Mode 2. In Mode 1, a sending terminal in coverage of a base station applies, by using scheduling request signaling, to the base station for an SL resource used for data transmission. The base station then schedules a resource for the sending terminal and a receiving terminal corresponding to the sending terminal, so that the sending terminal and the receiving terminal perform data transmission; or the base station directly configures, for the sending terminal by using radio resource control (radio resource control, RRC) signaling and/or physical layer signaling, an SL resource used for data transmission.

In other words, in Mode 1, the base station performs centralized resource scheduling on the SL resource, so that signal interference and resource overlapping problems in the SL can be effectively avoided. However, Mode 1 heavily depends on the base station, and the terminal can work in Mode 1 only when the terminal is in a network coverage area. In addition, in a process of applying for the SL resource from the base station, the sending terminal needs to perform signaling interaction with the base station for a plurality of times. Consequently, resource application time is long. Therefore, Mode 1 is not applicable to some SL scenarios in which no base station exists or SL scenarios (for example, vehicle to everything) in which a delay requirement is high.

In Mode 2, a resource used for SL transmission is determined by the sending terminal through channel sensing and selection. In this case, the terminal may work in a scenario without network coverage. Mode 2 supports dynamic allocation and semi-static allocation. A dynamic solution selects a new resource for each transmission block (transmission block, TB) and reserves a resource for retransmission of the TB. A semi-static solution selects and reserves periodic resources for a plurality of consecutive TBs (for example, periodic TBs) and their retransmission. Resource reservation information is indicated in 1st-stage (1st-stage) sidelink control information (sidelink control information, SCI).

In Mode 2, when a new TB is generated, or a previously reserved resource in the semi-static allocation solution is not suitable for transmission of a newly generated TB, a higher layer triggers SL resource selection. When SL resource selection is triggered in a slot $n$, the sending terminal determines, in a selection window (selection window) based on resource reservation information of another terminal sensed in a sensing window (sensing window), a candidate resource for TB transmission. In resource selection of Mode 2, the upper layer provides the following parameters:

a layer 1 (layer 1, L1) priority $prio_{TX}$ of the newly generated TB;
a quantity $L_{subCH}$ of subchannels used for transmitting the TB in a single slot;
a resource reservation spacing for transmission of a plurality of consecutive TBs, that is, a resource reservation period $P_{rsvp\_TX}$ (unit: ms), denoted as $P'_{rsvp\_TX}$ when converted into a logical slot;
a resource reselection counter $C_{resel}$; and

an available resource reservation spacing list *sl-ResourceReservePeriodList,* including values of all resource reservation spacings allowed in a resource pool.

The resource reservation spacing and the resource reselection counter are parameters in the semi-static allocation solution. For example, it is assumed that SL resource selection is triggered in the slot $n$, and specific steps of resource allocation in Mode 2 are as follows.

Step (1): Determine a selection window.

A slot range of the selection window is a slot $[n+T_1, n+T_2]$. $T_1$ is determined by a terminal capability, and $T_2$ is determined by a higher layer parameter *sl-SelectionWindowList* and a packet delay budget (packet delay budget, PDB).

Step (2): Determine a sensing window.

A slot range of the sensing window is

$$\left[ n - T_0, n - T^{SL}_{proc,0} \right)$$, $T_0$ is determined by the higher layer parameter *sl-SensingWindow,* and $T^{SL}_{proc,0}$ is determined by a subcarrier spacing used by the SL resource pool.

In the sensing window, the terminal continuously listens to each slot in the resource pool, decodes 1st-stage (1st-stage) sidelink control information (sidelink control information, SCI) in a physical sidelink control channel (physical sidelink control channel, PSCCH) in each slot, and measures reference signal received power (reference signal received power, RSRP) of a demodulation reference signal (demodulation reference signal, DMRS) of the PSCCH and/or reference signal received power of a demodulation reference signal of a physical sidelink shared channel (physical sidelink shared channel, PSSCH) scheduled by the PSCCH.

Step (3): Obtain a priority $p_i = prio_{RX}$ indicated in the 1st-stage SCI and a priority $p_j = prio_{TX}$ that is of transmitting the TB by the terminal and that is configured by the higher layer, and determine an RSRP threshold $Th$ $(p_i, p_j)$ related to $p_i$ and $p_j$.

Step (4): Determine an initial single slot candidate resource set $S_A$.

The initial single slot candidate resource set $S_A$ includes all single slot candidate resources in the selection window in the SL resource pool. A single slot candidate resource $R_{x,y}$ is defined as $L_{subCH}$ consecutive subchannels starting from a subchannel $x$ in a slot $t'^{SL}_y$. A total quantity of single slot candidate resources in the initial single slot candidate resource set $S_A$ is denoted as $M_{total}$.

Step (5): Exclude a single slot candidate resource from $S_A$ when a single slot candidate resource $R_{x,y}$ (it is assumed that the single slot candidate resource is located in a slot $t'^{SL}_y$) in the initial single slot candidate resource set $S_A$ meets the following two conditions.

(a): The terminal does not perform channel listening in the slot $t'^{SL}_m$ . $t'^{SL}_m$ is the slot in the sensing window.

(b): For any resource reservation spacing value $P_{rsvp}$ allowed by the higher layer parameter *sl-ResourceReservePeriodList*, slots $t'^{SL}_{m+q \times P_{rsvp}}$ and $t'^{SL}_{y+q \times P'_{rsvp\_RX}}$ overlap. $q$ is a positive integer that ensures that the slot $t'^{SL}_{m+q \times P_{rsvp}}$ is located in the selection window $[n+T_1, n+T_2]$, and $0 \leq j \leq C_{resel}-1$.

It should be noted that, in this application, a subscript of a slot may represent an index of the slot. For example, a subscript m in $t'^{SL}_m$ indicates that a slot index is m, and a subscript in $t'^{SL}_{m+q \times P_{rsvp}}$ indicates that a slot index is $m+q \times P_{rsvp}$.

Step (6): Exclude a single slot candidate resource from $S_A$ when a single slot candidate resource $R_{x,y}$ (it is assumed that the single slot candidate resource is located in a slot $t'^{SL}_y$ ) in the initial single slot candidate resource set $S_A$ meets the following three conditions.

(a): The terminal decodes, in the slot $t'^{SL}_m$ , 1st-stage SCI carried by a PSCCH, where a resource reservation period *(resource reservation period)* field exists in the 1st-stage SCI, a value indicated by the resource reservation period field is $P_{rsvp\_RX}$ (in a unit of ms), and the value is converted into a period $P'_{rsvp\_RX}$ in a unit of slot. In addition, a priority indicated by a priority (*priority*) field in the 1st-stage SCI is $prio_{RX}$. A subchannel resource occupied by the PSCCH and the PSSCH scheduled by the PSCCH in frequency domain is $R_{RX}$.

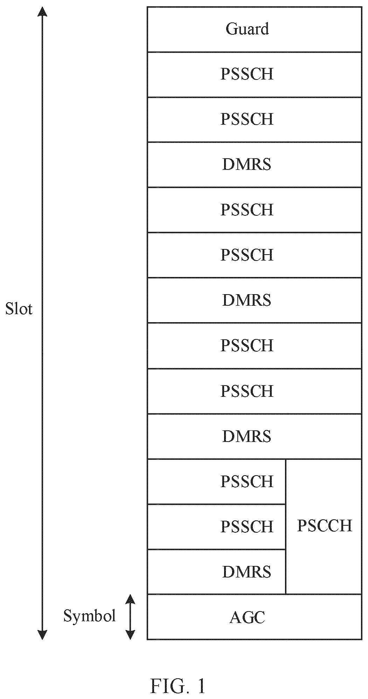

For example, the PSCCH and the PSSCH scheduled by the PSCCH may be located in a same slot in time domain. For example, one slot includes 14 SL symbols. As shown in FIG. 1, a PSCCH may occupy some frequency domain resources of a few symbols in the slot, and the PSSCH may occupy all frequency domain resources of most symbols in the slot. AGC refers to automatic gain control (automatic gain control, AGC).

(b): RSRP of the DMRS of the PSCCH or RSRP of the DMRS of the PSSCH scheduled by the PSCCH is greater than an RSRP threshold $Th(prio_{RX}, prio_{RX})$.

(c): Resources $R_{RX}$ and $R_{x,y+j \times P'_{rsvp\_TX}}$ in the slot $t'^{SL}_{m+q \times P'_{rsvp\_RX}}$ overlap, where $q$ is a positive integer that ensures that the slot $t'^{SL}_{m+q \times P'_{rsvp\_RX}}$ is in the selection window $[n+T_1, n+T_2]$. The resource $R_{RX}$ in the slot $t'^{SL}_{m+q \times P'_{rsvp\_RX}}$ is a periodic resource reserved for another terminal. $R_{x,y+j \times P'_{rsvp\_TX}}$ represents a resource obtained after the single slot candidate resource $R_{x,y}$ is extended according to a period $P'_{rsvp\_TX}$ , and $0 \leq j \leq C_{resel}-1$.

It may be understood that step (5) may be understood as related implementation when the terminal does not perform channel listening in the slot $t'^{SL}_m$ in the sensing window, and step (6) may be understood as related implementation when the terminal decodes 1st-stage SCI of a PSCCH in a slot $t'^{SL}_m$ in the sensing window. That is, for a slot $t'^{SL}_m$ in the sensing window, the terminal needs to perform only one of step (5) and step (6). That is, if the terminal does not perform channel listening in the slot $t'^{SL}_m$ in the sensing window, step (5) is performed; or if the terminal decodes 1st-stage SCI of a PSCCH in the slot $t'^{SL}_m$ in the sensing window, step (6) is performed.

Step (7): If a quantity of remaining single slot candidate resources in the initial single slot candidate resource set $S_A$ is less than $X \cdot M_{total}$, increase each RSRP threshold in the threshold $Th(prio_{RX}, prio_{TX})$ by 3 dB, and return to step (4) to continue to perform the procedure. If the quantity of remaining single slot candidate resources in $S_A$ is greater than $X \cdot M_{total}$, $S_A$ is reported to the higher layer. Herein, $X$ is a number that is greater than 0 and less than 1 and that is configured by the higher layer.

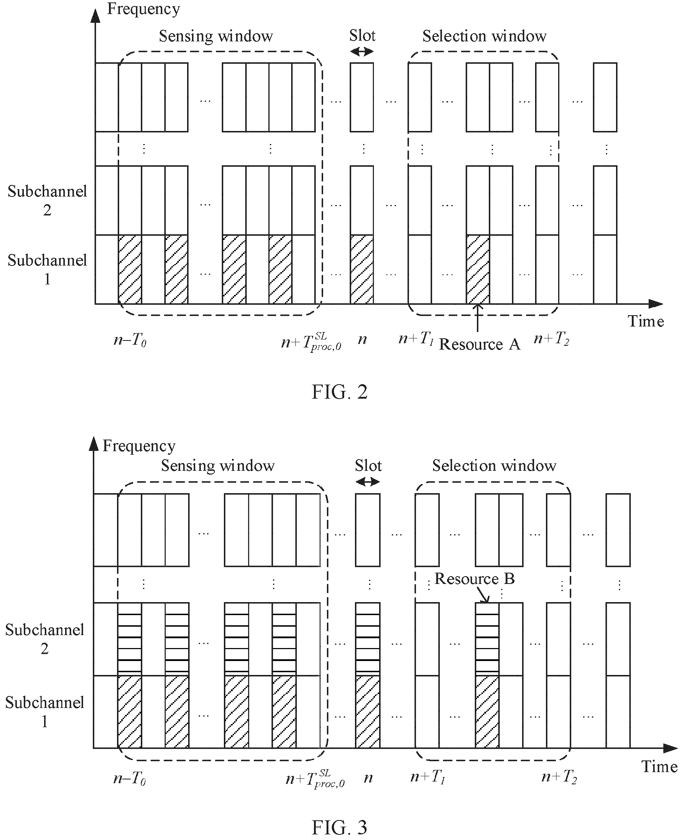

For example, a terminal 1 triggers a resource selection process in a slot n. It is assumed that the terminal 1 learns, by using 1st-stage SCI decoded in the sensing window, a periodic resource reserved by another terminal, as shown in FIG. 2 (represented by a rectangle filled with slashes in FIG. 2). Because the periodic resource reserved by the another terminal includes a resource that overlaps a resource A in the selection window, the terminal 1 may exclude the resource A in the sensing window from the initial single slot candidate resource set $S_A$.

It should be noted that, for ease of description, in the accompanying drawings of this application, an example in which a quantity $L_{subCH}$ of subchannels is equal to 1 is used for description. This does not mean that the quantity $L_{subCH}$ of subchannels is limited to 1 in this application. A value of $L_{subCH}$ is not limited in this application.

However, near-far effect and impact of non-ideal in-band transmission are considered, and the PSSCH schedule by the PSCCH may cause power leakage on an adjacent subchannel. This severely reduces the quality of the adjacent subchannel.

For example, as shown in FIG. 3, it is assumed that a single slot candidate resource represented by a rectangle filled with slashes is a resource that is reserved by a terminal 2 and that is sensed by the terminal 1. In this case, power leakage occurs on a subchannel 2 of a corresponding slot of a PSCCH and/or a PSSCH transmitted on these resources. That is, power leakage of a PSCCH and/or a PSSCH sent by the terminal 2 exists on a resource represented by a rectangle filled with horizontal lines in FIG. 3.

According to a current Mode 2 resource allocation, when no PSCCH scheduling PSSCH exists on the subchannel 2, or the terminal 1 fails to correctly decode $1^{st}$-stage SCI in a PSCCH on the subchannel 2 due to interference of the terminal 2, the terminal 1 does not exclude the single slot candidate resource on the subchannel 2 from the initial single slot candidate resource set $S_A$, so that the candidate resource set reported by the terminal to the higher layer includes a single slot candidate resource with poor channel quality. For example, the terminal 1 does not exclude a resource B in the sensing window from the initial single slot candidate resource set $S_A$.

Based on this, this application provides a resource selection method, so that a candidate resource set determined by a terminal includes a candidate resource with good quality, thereby improving sidelink transmission efficiency.

The technical solutions in embodiments of this application may be applied to various communication systems. The communication systems may be, for example, a vehicle to everything (vehicle to everything, V2X) system, a device-to-device (device-to-device, D2D) system, a machine-to-machine (machine to machine, M2M) system, an Internet of Things (Internet of Things, IoT), wireless fidelity (wireless fidelity, Wi-Fi), a worldwide interoperability for microwave access (worldwide interoperability for microwave access, WiMAX) system, and another next-generation communication system. This is not limited herein.

The technical solutions in embodiments of this application may be applied to various communication scenarios, for example, may be applied to one or more of the following communication scenarios: enhanced mobile broadband (enhanced mobile broadband, eMBB), ultra-reliable and low latency communication (ultra-reliable and low latency communication, URLLC), machine-type communication (machine-type communication, MTC), massive machine type communication (massive machine-type communication, mMTC), D2D, V2X, and IoT.

The communication system and the communication scenarios applicable to this application are merely examples for description. The communication system and the communication scenarios applicable to this application are not limited thereto. This is uniformly described herein. Details are not described below again.

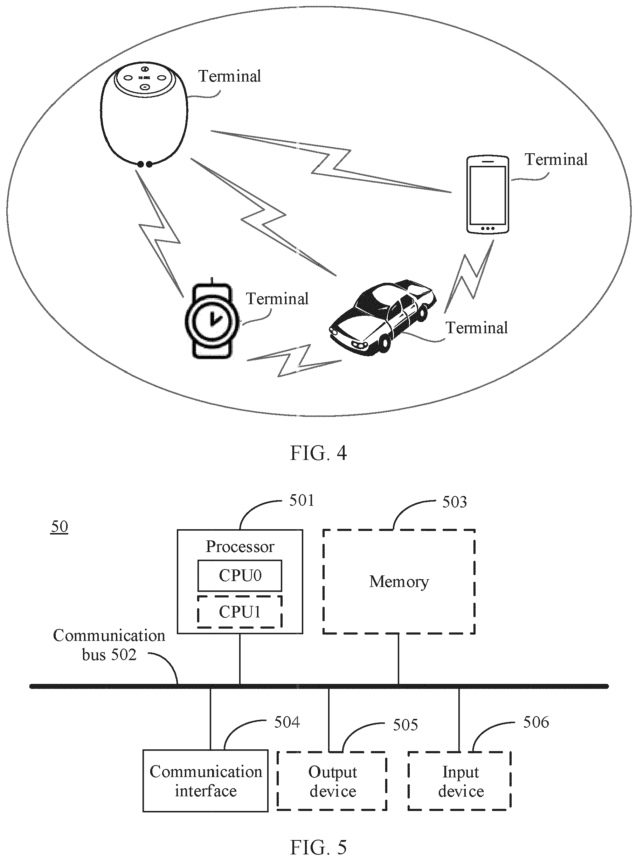

FIG. 4 shows a communication system according to an embodiment of this application. The communication system includes a plurality of terminals. The terminals may communicate with each other through an SL.

Optionally, the terminal in embodiments of this application may be a device having a wireless transceiver function. The terminal may also be referred to as user equipment (user equipment, UE), a terminal device, an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, or the like. The terminal may be, for example, a terminal in IoT, V2X, D2D, M2M, a 5G network, or a future evolved public land mobile network (public land mobile network, PLMN). The terminal may be deployed on land, including an indoor device, an outdoor device, a handheld device, or a vehicle-mounted device; or may be deployed on water (for example, on a ship); or may be deployed in the air (for example, on a plane, a balloon, or a satellite).

For example, the terminal may be an IoT device (for example, a sensor, an electricity meter, or a water meter), a V2X device, a station (station, STA) in a wireless local area network (wireless local area network, WLAN), a cellular phone, a cordless phone, a session initiation protocol (session initiation protocol, SIP) phone, a wireless local loop (wireless local loop, WLL) station, a personal digital assistant (personal digital assistant, PDA) device, a hand-held device with a wireless communication function, a computing device or another processing device connected to a wireless modem, a vehicle-mounted device, a wearable device (which may also be referred to as a wearable intelligent device), a tablet computer or a computer with wireless receiving and transmitting functions, a virtual reality (virtual reality, VR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a vehicle having a vehicle-to-vehicle (vehicle-to-vehicle, V2V) communication capability, an intelligent networked vehicle, an unmanned aerial vehicle having an unmanned aerial vehicle to unmanned aerial vehicle (UAV to UAV, U2U) communication capability, and the like. The terminal may be mobile or fixed. This is not specifically limited in this application.

Optionally, the terminal in embodiments of this application may also be referred to as a communication apparatus, and may be a general-purpose device or a dedicated device. This is not specifically limited in embodiments of this application.

Optionally, in embodiments of this application, the terminal in FIG. 4 may be implemented by using a communication apparatus 50 in FIG. 5. FIG. 5 is a diagram of a structure of the communication apparatus 50 according to an embodiment of this application. The communication apparatus 50 includes one or more processors 501, a communication bus 502, and at least one communication interface (FIG. 5 uses only an example in which a communication interface 504 and a processor 501 are included for description). Optionally, the communication apparatus may further include a memory 503.

The processor 501 may be a general-purpose central processing unit (central processing unit, CPU), a microprocessor, an application-specific integrated circuit (application-specific integrated circuit, ASIC), one or more integrated circuits configured to control program execution in the solutions of this application, or a processing core configured to process data (for example, computer program instructions). The processor may be a single-core processor (single-CPU), or may be a multi-core processor (multi-CPU).

During specific implementation, in an embodiment, the processor 501 may include one or more CPUs, for example, a CPU 0 and a CPU 1 in FIG. 5.

During specific implementation, in an embodiment, the communication apparatus 50 may include a plurality of processors.

The communication bus 502 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used for representation in FIG. 5, but this does not mean that there is only one bus or only one type of bus. The communication bus 502 is configured to connect different components in the communication apparatus 50, so that the different components can communicate with each other.

The communication interface 504 may be a transceiver module, configured to communicate with another device or a communication network. For example, the communication network may be, for example, the Ethernet, a radio access network (radio access network, RAN), or a wireless local area network (wireless local area networks, WLAN). For example, the communication interface 504 may be an apparatus such as a transceiver or a transceiver machine. Alternatively, the communication interface 504 may alternatively be a transceiver circuit located in the processor 501, and is configured to implement signal input and signal output of the processor.

The memory 503 may be an apparatus with a storage function. The memory 503 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, this is not limited thereto. The memory may exist independently, and is connected to the processor through the communication bus 502. The memory may alternatively be integrated with the processor.

The memory 503 is configured to store computer-executable instructions for executing the solutions of this application, and the processor 501 controls execution of the computer-executable instructions. The processor 501 is configured to execute the computer-executable instructions stored in the memory 503, to implement the method provided in embodiments this application.

Alternatively, optionally, in this embodiment of this application, the processor 501 may perform processing-related functions in a method provided in the following embodiments of this application, and the communication interface 504 is responsible for communication with another device or a communication network. This is not specifically limited in this embodiment of this application.

Optionally, the computer-executable instructions in this embodiment of this application may also be referred to as application program code. This is not specifically limited in this embodiment of this application.

During specific implementation, in an embodiment, the communication apparatus 50 may further include an output device 505 and an input device 506. The output device 505 communicates with the processor 501, and may display information in a plurality of manners. For example, the output device 505 may be a liquid crystal display (liquid crystal display, LCD), a light emitting diode (light emitting diode, LED) display device, a cathode ray tube (cathode ray tube, CRT) display device, a projector (projector), or the like. The input device 506 communicates with the processor 501, and may receive user input in a plurality of manners. For example, the input device 506 may be a mouse, a keyboard, a touchscreen device, a sensor device, or the like.

It should be noted that the composition structure shown in FIG. 5 does not constitute any limitation on the communication apparatus. In addition to the components shown in FIG. 5, the communication apparatus may include more or fewer components than those shown in the figure, a combination of some components, or a different arrangement of the components.

It may be understood that in embodiments of this application, a terminal may perform some or all of the steps in embodiments of this application, and these steps or operations are merely examples. In embodiments of this application, another operation or various operation variants may further be performed. In addition, the steps may be performed in a sequence different from a sequence presented in embodiments of this application, and not all the operations in embodiments of this application may be performed.

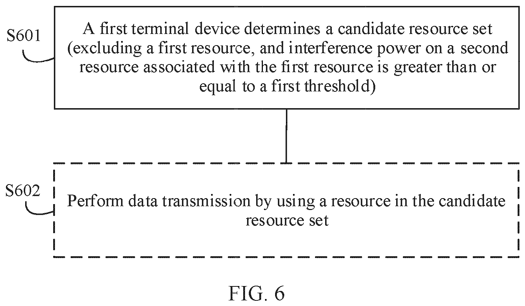

FIG. 6 is a flowchart of a resource selection method according to an embodiment of this application. The method may be applied to a first terminal, and the first terminal may be any terminal in the communication system shown in FIG. 4. As shown in FIG. 6, the resource selection method may include the following steps.

S601: A first terminal determines a candidate resource set.

Optionally, the candidate resource set may include a resource in a selection window in an SL resource pool. The first terminal may obtain a related parameter from a higher layer to determine the selection window and the candidate resource set. For details, refer to related descriptions in step (2) and step (4). Details are not described herein again.

For example, in embodiments of this application, a minimum time granularity of the resource may be an orthogonal frequency division multiplexing (orthogonal frequency division multiplexing, OFDM) slot, a subframe, or a frame; and a minimum frequency granularity of the resource may be a subchannel. For example, a resource in embodiments of this application may be L consecutive subchannels starting from a subchannel $x$ in a slot. When the minimum time granularity of the resource is an OFDM slot, the resource in this application may be referred to as a single slot resource, and the resource in the candidate resource set may be referred to as a single slot candidate resource.

The candidate resource set does not include a first resource. Interference power on a second resource associated with the first resource is greater than or equal to a first threshold. For example, when the minimum time granularity of the resource is the OFDM slot, the first resource may be referred to as a first single slot candidate resource.

A periodic extension resource of the second resource overlaps (partially or completely overlaps) a resource set corresponding to the first resource. In some embodiments, that the first resource is associated with the second resource may be understood as that the periodic extension resource of the second resource overlaps the resource set corresponding to the first resource.

A time domain location of the second resource overlaps a time domain location of a third resource, and a frequency domain location of the second resource does not overlap a frequency domain location of the third resource. For example, the frequency domain location of the second resource is adjacent to the frequency domain location of the third resource. Certainly, the frequency domain location of the second resource may not be adjacent to the frequency domain location of the third resource. This is not specifically limited in this application.

The third resource is a resource in the sensing window. The third resource carries a PSCCH of the second terminal and/or a PSSCH scheduled by the PSCCH. For example, the first terminal may obtain the related parameter from the higher layer to determine the sensing window. For details, refer to related descriptions in step (1). Details are not described herein again.

In some embodiments, that the third resource carries a PSCCH of the second terminal and/or a PSSCH scheduled by the PSCCH may also be understood as: The third resource carries the PSCCH sent by the second terminal and/or the PSSCH scheduled by the PSCCH, and the PSCCH and the PSSCH may be replaced with each other.

The interference power on the second resource is determined based on power that a signal carried on the third resource leaks on the second resource. In other words, in some embodiments, it may be considered that the interference power on the second resource is caused by the PSCCH and/or the PSSCH transmitted by the second terminal on the third resource. Therefore, the interference on the second resource may be understood as non-co-channel interference caused by the second terminal to the first terminal.

Optionally, that the interference power on a second resource associated with the first resource is greater than or equal to a first threshold may be used as a target condition. If the candidate resource set initially determined by the first terminal includes the first resource, when the target condition is met, the first terminal may exclude the first resource from the candidate resource set, to obtain a candidate resource set that does not include the first resource.

Optionally, the power that the signal carried on the third resource leaks on the second resource may be universal in-band emission power, carrier leakage power, or mirror tone interference power.

Optionally, the second terminal may be a terminal that shares a same sidelink resource pool with the first terminal, and/or a distance between the second terminal and the first terminal is less than or equal to a second threshold.

Optionally, the periodic extension resource of the second resource is determined based on the second resource and a first period of the second terminal. The first period of the second terminal is a period in which the second terminal reserves a resource. The PSCCH of the second terminal carried on the third resource may carry 1st-stage SCI, and the 1st-stage SCI may indicate the first period of the second terminal.

Optionally, the resource set corresponding to the first resource includes the first resource and/or periodic extension resource of the first resource, and the periodic extension resource of the first resource is determined based on the first resource and a second period of first terminal. For example, the frequency domain location of the periodic extension resource of the first resource overlaps the frequency domain location of the first resource, and the time domain period is the second period. The second period of the first terminal is a period in which the first terminal reserves a resource, and the second period may be configured by using the higher layer parameter.

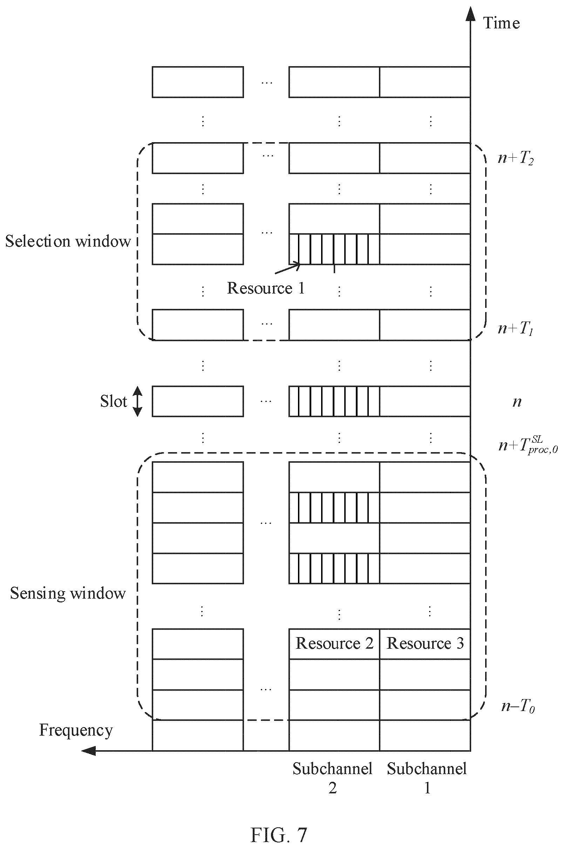

For example, it is assumed that the resource set corresponding to the first resource includes the first resource. As shown in FIG. 7, the first resource is represented as a resource 1, the second resource is represented as a resource 2, the third resource is represented as a resource 3, and the periodic extension resource of the second resource is represented by a rectangle filled with horizontal lines. Refer to FIG. 7. One of the periodic extension resources of the second resource overlaps the resource 1, a time domain location of the resource 2 overlaps a time domain location of the resource 3, and a frequency domain location of the resource 2 does not overlap a frequency domain location of the resource 3 (in FIG. 7, an example in which the frequency domain locations are adjacent is used for description). Based on this example, when the interference power on the resource 2 is greater than or equal to the first threshold, the first terminal excludes the resource 1 from the candidate resource set, that is, the candidate resource set does not include the resource 1.

It may be understood that, because the periodic extension resource of the second resource is determined based on the second resource and the first period of the second terminal, and the time domain location of the second resource overlaps the time domain location of the third resource, a periodic resource (that is, a periodic extension resource of the third resource determined based on the third resource and the first period of the second terminal) reserved by the second terminal overlaps a time domain location of the periodic extension resource of the second resource. Therefore, on the periodic extension resource of the second resource, interference caused by the PSCCH and/or the PSSCH transmitted by the second terminal on the periodic extension resource of the third resource exists. In this case, if the periodic extension resource of the second resource overlaps the first resource or the periodic extension resource of the first resource, interference exists on the first resource. In this scenario, the candidate resource determined by the first terminal does not include the first resource, so that the first terminal can be prevented from performing transmission by using the first resource with poor quality or the periodic extension resource of the first resource.

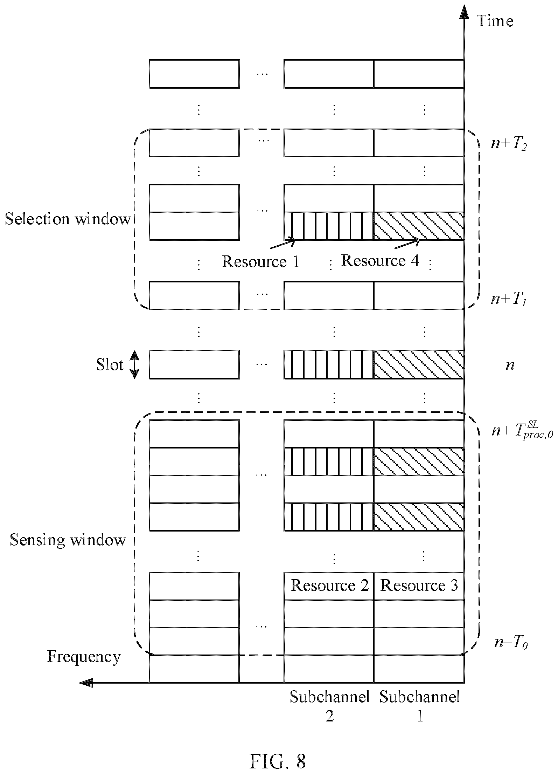

For example, refer to FIG. 8. The periodic extension resource of the third resource is represented by a rectangle filled with slashes. A time domain location of a resource (that is, a resource 4) in the periodic extension resource of the third resource is the same as that the time domain location of the resource 1. Transmission of the second terminal on the resource 4 causes interference to the resource 1. In this case, quality of the resource 1 is poor, and the resource 1 may be excluded from the candidate resource set.

Optionally, thresholds (for example, the first threshold and the second threshold) in this application may be predefined in a protocol, or may be configured by the network device by using the higher layer parameter, or may be determined by the first terminal. This is not specifically limited in this application.

Optionally, after determining the candidate resource set, the first terminal may perform the following step S602.

S602: Perform data transmission by using a resource in the candidate resource set.

Optionally, after determining the candidate resource set, the first terminal may select at least one resource in the candidate resource set, and perform data transmission on the at least one resource.

Based on the solution provided in this application, when determining the resource used for data transmission, if a PSCCH of another terminal is decoded on a frequency domain resource A in a slot in a sensing window, the terminal may obtain interference power on a frequency domain resource B that does not overlap the frequency domain resource A in the slot. When interference power on the frequency domain resource B is large, a resource whose frequency domain location is a frequency domain resource B in a candidate resource set is excluded. Therefore, interference on the resource finally determined by the terminal for data transmission is small or does not exist, thereby improving data transmission reliability.

The foregoing describes an overall procedure of the resource selection method provided in this application. The following describes in detail some details of the resource selection method.

The following describes the periodic extension resource of the second resource.

In a possible implementation, the periodic extension resource of the second resource may be determined only based on the second resource and the first period of the second terminal. For example, the frequency domain location of the periodic extension resource of the second resource overlaps the frequency domain location of the second resource, and the time domain period is the second period.

For example, in this possible implementation, if the second period is represented by $P'_{rsvp\_TX}$, the first resource is represented by $R_{x,y}$, the first period is represented by $P'_{rsvp\_RX}$, the second resource is represented by $R_{RX,1}$, and the slot in which the second resource is located is represented by $t'^{SL}_m$, that the periodic extension resource of the second resource overlaps the resource set corresponding to the first resource may be represented as that resources $R_{RX,1}$ and $R_{x,y+j\times P'_{rsvp\_TX}}$ in the slot $t'^{SL}_{m+q\times P'_{rsvp\_RX}}$ overlap. $q$ is a positive integer that ensures that the slot $t'^{SL}_{m+q\times P'_{rsvp\_RX}}$ is located in the selection window $[n+T_1,n+T_2]$. $0 \leq j \leq C_{resel}-1$.

In another possible implementation, the periodic extension resource of the second resource is determined based on the second resource, the first period of the second terminal, and a third period of the third terminal.

The second resource carries a PSCCH of the third terminal and/or a PSSCH scheduled by the PSCCH. In other words, the second resource is used to carry the PSCCH of the third terminal and/or the PSSCH scheduled by the PSCCH, or the third terminal sends, on the second resource, the PSCCH of the third terminal and/or the PSSCH scheduled by the PSCCH.

Optionally, the third period of the third terminal is a period in which the third terminal reserves a resource. The PSCCH of the third terminal carried on the second resource may carry 1st-stage SCI, and the 1st-stage SCI may indicate the third period of the third terminal.

Optionally, in this possible implementation, the periodic extension resource of the second resource may be a union set of resources obtained by extending the second resource based on the first period of the second terminal and resources obtained by extending the second resource based on the third period of the third terminal. Alternatively, the periodic extension resource of the second resource may be a resource obtained by extending the second resource based on a least common multiple of the first period and the third period. For example, a frequency domain location of the periodic extension resource of the second resource is the same as a frequency domain location of the second resource, and a time domain period is a least common multiple of the first period and the third period.

For example, in this possible implementation, if the second period is represented by $P'_{rsvp\_TX}$, the first resource is represented by $R_{x,y}$, the first period is represented by $P'_{rsvp\_RX}$, the third period is represented by $P'_{rsvp\_RX,3}$, the second resource is represented by $R_{RX,1}$, and the slot in which the second resource is located is represented by $t'^{SL}_m$, that the periodic extension resource of the second resource overlaps the resource set corresponding to the first resource may be represented as that resource $R_{RX,1}$ and $R_{x,y+j\times P'_{rsvp\_TX}}$ in slots $t'^{SL}_{m+q\times P'_{rsvp\_RX}}$ or $t'^{SL}_{m+p\times P'_{rsvp\_RX,3}}$ overlap. $q$ is a positive integer that ensures that the slot $t'^{SL}_{m+q\times P'_{rsvp\_RX}}$ is located in the selection window $[n+T_1,n+T_2]$. $p$ is a positive integer that ensures that the slot $t'^{SL}_{m+p\times P'_{rsvp\_RX,3}}$ is located in the selection window $[n+T_1,n+T_2]$. $0 \leq j \leq C_{resel}-1$.

The following describes the interference power on the second resource.

In a possible implementation, the interference power on the second resource is determined only based on power of the signal carried on the third resource that leaks on the second resource.

For example, the interference power on the second resource is equal to power that the signal carried on the third resource leaks on the second resource.

In another possible implementation, the interference power on the second resource is determined based on the power that the signal carried on the third resource leaks on the second resource, and signal received power of a PSCCH of a third terminal carried on the second resource and/or signal received power of a PSSCH scheduled by the PSCCH.

That is, in addition to non-co-channel interference caused by the second terminal to the first terminal, the interference on the second resource further includes co-channel interference caused by the third terminal to the first terminal.

In some embodiments, that the second resource carries the PSCCH of the third terminal and/or the PSSCH scheduled by the PSCCH may also be understood as: The second resource carries the PSCCH sent by the third terminal and/or the PSSCH scheduled by the PSCCH, and the PSCCH and the PSSCH may be replaced with each other.

Optionally, in this possible implementation, the interference power on the second resource may be a sum of power of the signal carried on the third resource that leaks on the second resource, and the signal received power of the PSCCH of the third terminal carried on the second resource and/or the signal received power of the PSSCH scheduled by the PSCCH; or may be an average value of power of the signal carried on the third resource that leaks on the second resource, and the signal received power of the PSCCH of the third terminal carried on the second resource and/or the signal received power of the PSSCH scheduled by the PSCCH; or may be a maximum value of power of the signal carried on the third resource that leaks on the second resource, and the signal received power of the PSCCH of the third terminal carried on the second resource and/or the signal received power of the PSSCH scheduled by the PSCCH.

Optionally, the signal received power of the PSCCH of the third terminal may be a sum of signal received power on a plurality of physical resource blocks (physical resource block, PRB) or resource elements (resource element, RE) occupied by the PSSCH; or may be a maximum value of signal received power on a plurality of PRBs or REs occupied by the PSCCH; or may be an average value of signal received power on a plurality of PRBs or REs occupied by the PSCCH. For the signal received power of the PSSCH, refer to the description of the signal received power of the PSCCH, and details are not described herein again.

Optionally, the interference power on the second resource may be obtained by the first terminal through measurement. Alternatively, the interference power on the second resource may be obtained by the fourth terminal through measurement and sent to the first terminal.

Optionally, the fourth terminal may be used as an auxiliary terminal of the first terminal, to assist the first terminal in selecting a resource. Before the first terminal selects a resource, the first terminal and the fourth terminal may perform negotiation through signaling interaction, so that the fourth terminal serves as the auxiliary terminal of the first terminal.

Optionally, the fourth terminal may perform sensing on each resource in the sensing window. If the fourth terminal senses a PSCCH and/or a PSSCH on a resource, interference power on a related resource of the resource may be determined. For example, it is assumed that the fourth terminal senses, on the third resource in the sensing window, the PSCCH of the second terminal and/or the PSSCH scheduled by the PSCCH, the fourth terminal may determine the interference power on the second resource. For a relationship between the second resource and the third resource, refer to the description in step S601. Details are not described herein again.

Optionally, after determining the interference power on the second resource, the fourth terminal may send indication information to the first terminal, where the indication information indicates the interference power on the second resource. Correspondingly, the first terminal receives the indication information from the fourth terminal, and learns the interference power on the second resource based on the indication information.

It should be noted that all manners of determining the interference power on the second resource provided in this application are applicable to the first terminal or the fourth terminal.

The following describes the power that the signal carried on the third resource leaks on the second resource.

In a possible implementation, the power that the signal carried on the third resource leaks on the second resource is signal received power on a first channel state information interference measurement (channel state information-interference measurement, CSI-IM) resource. The first CSI-IM resource is located on the second resource.

It may be understood that, the power that the signal carried on the third resource leaks on the second resource is the signal received power on the first CSI-IM resource, and for the first terminal, is interference power.

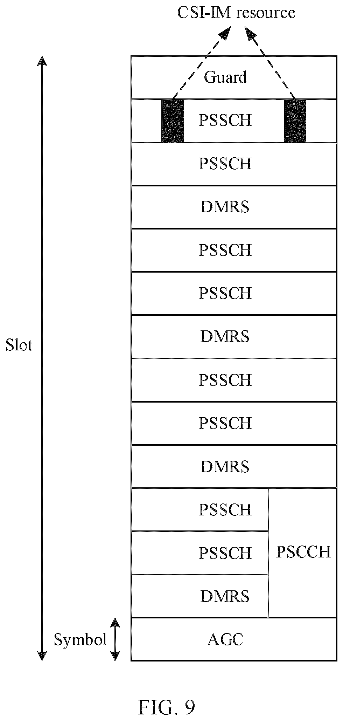

Optionally, the CSI-IM resource may be located on a symbol other than a guard (guard) symbol. For example, as shown in FIG. 9, the CSI-IM resource may be located in the last symbol before the guard symbol. The symbol in this application may represent a time length, for example, may be an OFDM symbol. This is not limited herein.

Optionally, the CSI-IM resource is not used for PSSCH transmission or PSCCH transmission, that is, the PSSCH and the PSCCH sent by the terminal do not occupy the CSI-IM resource. The terminal may measure interference of another terminal on the CSI-IM resource.

In some embodiments, the first CSI-IM resource may be configured by the third terminal. For example, the third terminal may send first configuration information, where the first configuration information is used to configure the first CSI-IM resource on the second resource. The first configuration information may be carried in 1st-stage SCI of the third terminal. The first configuration information may indicate a time domain location and a frequency domain location of the first CSI-IM resource.

Optionally, when the interference power on the second resource is determined by the fourth terminal, the fourth terminal may receive the first configuration information sent by the third terminal.

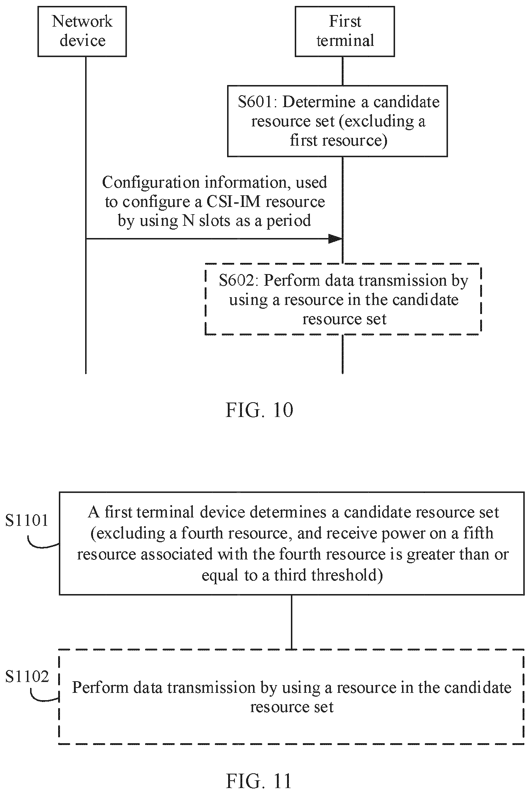

In some other embodiments, the CSI-IM resource may be configured by a network device. For example, as shown in FIG. 10, before step S602, the resource selection method provided in this application may further include the following steps.

The network device sends second configuration information to the first terminal, and correspondingly, the first terminal receives the second configuration information from the network device. The second configuration information is used to configure a periodic CSI-IM resource, where the periodic CSI-IM resource includes the first CSI-IM resource. A period of the periodic CSI-IM resource configured by the network device may be N slots, where N is a positive integer. In other words, the network device may periodically configure the CSI-IM resource in time domain.

Optionally, for a frequency domain location of a CSI-IM resource, the network device may configure some REs in each subchannel as CSI-IM resources. In this case, the second configuration information may include a start location of the REs used as the CSI-IM resources in frequency domain and a quantity of REs.

Alternatively, the network device may configure the frequency domain location of the CSI-IM resource by using M subchannels as a period. For example, using an example in which M is equal to 2, the network device may configure some REs on subchannels whose indexes are 0, 2, 4, 6, and 8 as the CSI-IM resources. In this case, the second configuration information may include start locations of the REs used as the CSI-IM resources in frequency domain, the quantity of REs, and the period M.

Optionally, the network device may be a device that connects the terminal to a wireless network, for example, a base station or a transmission and reception point (transmission reception point, TRP) in various forms. A form of the network device is not specifically limited in this application.

Optionally, when the interference power on the second resource is determined by the fourth terminal, the network device may send the second configuration information to the fourth terminal. Correspondingly, the fourth terminal receives the second configuration information from the network device.

In some other embodiments, a time frequency location of the CSI-IM resource may also be specified in a protocol. This is not specifically limited in this application. Optionally, the signal received power on the first CSI-IM resource may be average received power on a plurality of REs included in the first CSI-IM resource, or may be maximum received power on the plurality of REs included in the first CSI-IM resource.

Optionally, the signal received power on the first CSI-IM resource may be obtained by the first terminal through measurement. Alternatively, the signal received power on the first CSI-IM resource may be obtained by the fourth terminal through measurement and sent to the first terminal.

In another possible implementation, power that the signal carried on the third resource leaks on the second resource is determined based on the signal received power on the first CSI-IM resource and signal received power on a resource (denoted as a non-CSI-IM resource) other than the first CSI-IM resource in the second resource. For the first CSI-IM resource, refer to the foregoing related description. Details are not described herein again.

Optionally, the power that the signal carried on the third resource leaks on the second resource may be a maximum value or an average value of the signal received power on the first CSI-IM resource of the second resource and signal received power on the non-CSI-IM resource of the second resource.

Optionally, the signal received power on the non-CSI-IM resource of the second resource may be an average signal received power on a plurality of REs included in the non-CSI-IM resource, or may be a maximum signal received power on the plurality of REs.

Based on this solution, an accurate interference power value can be obtained through measurement, to prevent the terminal from excluding a resource with good quality from the candidate resource set.

In still another possible implementation, the power that the signal carried on the third resource leaks on the second resource is determined based on signal received power on the third resource and an in-band emission (in-band emission, IBE) module plate. For example, the first terminal may input the signal received power on the third resource into the in-band emission mask, to obtain power that the signal carried on the third resource leaks on the second resource.

Optionally, the in-band emission mask may describe a ratio of average output power of a PRB in the transmit bandwidth occupied by the terminal to average output power of a PRB outside the transmit bandwidth. In some examples, the in-band emission mask may be preconfigured. For example, the in-band emission mask may be pre-determined by the network device and sent to the first terminal or the fourth terminal. For example, the network device pre-configures the in-band emission mask through layer 1 signaling or layer 3 signaling. In some other examples, the first terminal or the fourth terminal may obtain an in-band emission mask preconfigured on the second terminal. For example, the first terminal or the fourth terminal requests the second terminal to send the in-band emission mask.

Optionally, the signal received power on the third resource may be determined based on the signal received power of the PSCCH of the second terminal carried on the third resource and/or the signal received power of the PSSCH scheduled by the PSCCH. For example, the signal received power on the third resource is the signal received power of the PSCCH of the second terminal; or

the signal received power on the third resource is the signal received power of the PSSCH scheduled by the PSCCH; or

the signal received power on the third resource is a maximum value of the signal received power of the PSCCH of the second terminal and the signal received power of the PSSCH scheduled by the PSCCH; or

the signal received power on the third resource is a minimum value of the signal received power of the PSCCH of the second terminal and the signal received power of the PSSCH scheduled by the PSCCH; or

the signal received power on the third resource is an average value of the signal received power of the PSCCH of the second terminal and the signal received power of the PSSCH scheduled by the PSCCH.

Based on this possible implementation, the first terminal may estimate the interference power on the second resource based on the signal received power on the third resource and the in-band emission mask, thereby reducing implementation complexity.

Based on the foregoing solution, for example, a time domain period of the periodic extension resource of the second resource is a first period, interference power on the second resource is equal to the power of the signal carried on the third resource that leaks on the second resource, and the power of the signal carried on the third resource that leaks on the second resource is the signal received power on the first CSI-IM resource. This application further provides a specific step of resource selection in Mode 2. It is assumed that an SL resource triggers Mode 2 resource selection in a slot *n*. The resource selection steps are as follows.

Step (1): Determine a selection window.

Step (2): Determine a sensing window.

Step (3): Obtain a priority $p_i = prio_{RX}$ indicated in the $1^{st}$-stage SCI and a priority $p_j = prio_{TX}$ that is of transmitting the TB by the terminal and that is configured by the higher layer, and determine an RSRP threshold $Th$ ($p_i$, $p_j$) related to $p_i$ and $p_j$.

Step (4): Determine an initial single slot candidate resource set $S_A$.

Step (5): Exclude a single slot candidate resource from $S_A$ when a single slot candidate resource $R_{x,y}$ (it is assumed that the single slot candidate resource is located in a slot $t'^{SL}_y$) in the initial single slot candidate resource set $S_A$ meets the following two conditions.

(a): The terminal does not perform channel listening in the slot $t'^{SL}_m$. $t'^{SL}_m$ is the slot in the sensing window.

(b): For any resource reservation spacing value $P_{rsvp}$ allowed by a higher layer parameter *sl-ResourceReservePeriodList,* slots $t'^{SL}_{m+q\times P_{rsvp}}$ and $t'^{SL}_{y+q\times P'_{rsvp\_RX}}$ overlap. $q$ is a positive integer that ensures that the slot $t'^{SL}_{m+q\times P_{rsvp}}$ is located in the selection window [$n+T_1,n+T_2$], and $0 \leq j \leq C_{resel}-1$.

It should be noted that, in this application, a subscript of a slot may represent an index of the slot. For example, a subscript m in $t'^{SL}_m$ indicates that a slot index is m, and a subscript in $t'^{SL}_{m+q\times P_{rsp}}$ indicates that a slot index is $m+q\times P_{rsvp}$.

Step (6): Exclude a single slot candidate resource from $S_A$ when a single slot candidate resource $R_{x,y}$ (it is assumed that the single slot candidate resource is located in a slot $t'^{SL}_y$) in the initial single slot candidate resource set $S_A$ meets the following three conditions.

(a): The terminal decodes, in the slot $t'^{SL}_m$, $1^{st}$-stage SCI carried by a PSCCH, where a resource reservation period *(resource reservation period)* field exists in the $1^{st}$-stage SCI, a value indicated by the resource reservation period field is $P_{rsvp\_RX}$ (in a unit of ms), and the value is converted into a period $P'_{rsvp\_RX}$ in a unit of slot. In addition, a priority indicated by a priority *(priority)* field in the $1^{st}$-stage SCI is $prio_{RX}$. A subchannel resource occupied by the PSCCH and the PSSCH scheduled by the PSCCH in frequency domain is $R_{RX}$.

(b): RSRP of the DMRS of the PSCCH or RSRP of the DMRS of the PSSCH scheduled by the PSCCH is greater than an RSRP threshold $Th(prio_{RX},prio_{TX})$.

(c): Resources $R_{RX}$ and $R_{x,y+j\times P'_{rsvp\_TX}}$ in the slot $t'^{SL}_{m+q\times P'_{rsvp\_RX}}$ overlap, where $q$ is a positive integer that ensures that the slot $t'^{SL}_{m+q\times P'_{rsvp\_RX}}$ is in the selection window [$n+T_1,n+T_2$]. The resource $R_{RX}$ in the slot $t'^{SL}_{m+q\times P'_{rsvp\_RX}}$ is a periodic resource reserved for another terminal. $R_{x,y+j\times P'_{rsvp\_TX}}$ represents a resource obtained after the single slot candidate resource $R_{x,y}$ is extended according to a period $P'_{rsvp\_TX}$, and $0 \leq j \leq C_{resel}-1$.

Step (6a): Exclude a single slot candidate resource from $S_A$ when a single slot candidate resource $R_{x,y}$ (it is assumed that the single slot candidate resource is located in a slot $t'^{SL}_y$) in the initial single slot candidate resource set $S_A$ meets the following three conditions.

(a): The terminal decodes, in the slot $t'^{SL}_m$ including a CSI-IM resource, $1^{st}$-stage SCI carried by a PSCCH, where a resource reservation period *(resource reservation period)* field exists in the $1^{st}$-stage SCI, a value indicated by the resource reservation period field is $P_{rsvp\_RX}$ (in a unit of ms), and the value is converted into a period $P'_{rsvp\_RX}$ (that is, the first period) in a unit of slot. A subchannel resource occupied by the PSCCH and the PSSCH scheduled by the PSCCH in frequency domain is $R_{RX}$.

(b): Signal received power on a CSI-IM resource (that is, the first CSI-IM resource) of a subchannel resource $R_{RX,1}$ that does not overlap $R_{RX}$ in frequency domain is greater than or equal to a first threshold.

(c): Subchannel resources $R_{RX,1}$ and $R_{x,y+j\times P'_{rsvp\_TX}}$ in the slot $t'^{SL}_{m+q\times P'_{rsvp\_RX}}$ overlap. $q$ is a positive integer that ensures that the slot $t'^{SL}_{m+q\times P'_{rsvp\_RX}}$ is located in the selection window [$n+T_1,n+T_2$]. $0 \leq j \leq C_{resel}-1$.

Step (7): If a quantity of remaining single slot candidate resources in the initial single slot candidate resource set $S_A$ is less than $X \cdot M_{total}$, increase each RSRP threshold in the threshold $Th(prio_{RX},prio_{TX})$ by 3 dB, and return to step (4) to continue to perform the procedure. If the quantity of remaining single slot candidate resources in $S_A$ is greater than $X \cdot M_{total}$, $S_A$ is reported to the higher layer. Herein, $X$ is a number that is greater than 0 and less than 1 and that is configured by the higher layer.

For step (1) to step (6) and step (7), refer to the foregoing related descriptions. Details are not described herein again. In other words, compared with an existing step, step (6a) is added to the resource selection steps in Mode 2 provided in this application.

For a relationship between step (5) and step (6), refer to the foregoing related description. Details are not described herein again. For step (6) and step (6a), the terminal may first perform step (6) and perform step (6a) when the three conditions in step (6) are not all met; or the terminal may first perform step (6a) and perform step (6) when the three conditions in step (6a) are not all met. An execution sequence of step (6) and step (6a) is not specifically limited in this application. Based on the foregoing solution, for example, the time domain period of the periodic extension resource of the second resource is the first period, and the power of the signal carried on the third resource that leaks on the second resource is determined by the signal received power on the third resource and the in-band emission mask. This application further provides a specific step of resource selection in Mode 2. It is assumed that the SL resource triggers Mode 2 resource selection in the slot $n$. The resource selection steps are as follows.

Step (1): Determine a selection window.

Step (2): Determine a sensing window.

Step (3): Obtain a priority $p_i = prio_{RX}$ indicated in the 1st-stage SCI and a priority $p_j = prio_{TX}$ that is of transmitting the TB by the terminal and that is configured by the higher layer, and determine an RSRP threshold $Th$ $(p_i, p_j)$ related to $p_i$ and $p_j$.

Step (4): Determine an initial single slot candidate resource set $S_A$.

Step (5): Exclude a single slot candidate resource from $S_A$ when a single slot candidate resource $R_{x,y}$ (it is assumed that the single slot candidate resource is located in a slot $t'^{SL}_y$) in the initial single slot candidate resource set $S_A$ meets the following two conditions.

(a): The terminal does not perform channel listening in the slot $t'^{SL}_m$. $t'^{SL}_m$ is the slot in the sensing window.

(b): For any resource reservation spacing value $P_{rsvp}$ allowed by a higher layer *parameter sl-ResourceReservePeriodList,* slots $t'^{SL}_{m+q\times P_{rsvp}}$ and $t'^{SL}_{y+q\times P'_{rsvp\_RX}}$ overlap. $q$ is a positive integer that ensures that the slot $t'^{SL}_{m+q\times P_{rsvp}}$ is located in the selection window $[n+T_1, n+T_2]$, and $0 \le j \le C_{resel} - 1$.

It should be noted that, in this application, a subscript of a slot may represent an index of the slot. For example, a subscript m in $t'^{SL}_m$ indicates that a slot index is m, and a subscript in $t'^{SL}_{m+q\times P_{rsvp}}$ indicates that a slot index is $m+q\times P_{rsvp}$.

Step (6): Exclude a single slot candidate resource from $S_A$ when a single slot candidate resource $R_{x,y}$ (it is assumed that the single slot candidate resource is located in a slot $t'^{SL}_y$) in the initial single slot candidate resource set $S_A$ meets the following three conditions.

(a): The terminal decodes, in the slot $t'^{SL}_m$, 1st-stage SCI carried by a PSCCH, where a resource reservation period (*resource reservation period*) field exists in the 1st-stage SCI, a value indicated by the resource reservation period field is $P_{rsvp\_RX}$ (in a unit of ms), and the value is converted into a period $P'_{rsvp\_RX}$ in a unit of slot. In addition, a priority indicated by a priority (*priority*) field in the 1st-stage SCI is $prio_{RX}$. A subchannel resource occupied by the PSCCH and the PSSCH scheduled by the PSCCH in frequency domain is $R_{RX}$.

(b): RSRP of the DMRS of the PSCCH or RSRP of the DMRS of the PSSCH scheduled by the PSCCH is greater than an RSRP threshold $Th(prio_{RX}, prio_{TX})$.

(c): Resources $R_{RX}$ and $R_{x, y+j\times P'_{rsvp\_TX}}$ in the slot $t'^{SL}_{m+q\times P'_{rsvp\_RX}}$ overlap, where $q$ is a positive integer that ensures that the slot $t'^{SL}_{m+q\times P'_{rsvp\_RX}}$ is in the selection window $[n+T_1, n+T_2]$. The resource $R_{RX}$ in the slot $t'^{SL}_{m+q\times P'_{rsvp\_RX}}$ is a periodic resource reserved for another terminal. $R_{x, y+j\times P'_{rsvp\_TX}}$ represents a resource obtained after the single slot candidate resource $R_{x,y}$ is extended according to a period $P'_{rsvp\_TX}$, and $0 \le j \le C_{resel} - 1$.

Step (6b): Exclude a single slot candidate resource from $S_A$ when a single slot candidate resource $R_{x,y}$ (it is assumed that the single slot candidate resource is located in a slot $t'^{SL}_y$) in the initial single slot candidate resource set $S_A$ meets the following three conditions.

(a): The terminal decodes, in the slot $t'^{SL}_m$, 1st-stage SCI carried by a PSCCH, where a resource reservation period *(resource reservation period)* field exists in the 1st-stage SCI, a value indicated by the resource reservation period field is $P_{rsvp\_RX}$ (in a unit of ms), and the value is converted into a period $P'_{rsvp\_RX}$ in a unit of slot (that is, the first period).

A subchannel resource occupied by the PSCCH and the PSSCH scheduled by the PSCCH in frequency domain is $R_{RX}$.

(b): The terminal determines the signal received power of the PSCCH and/or the signal received power of the PSSCH scheduled by the PSCCH, and determines, based on the in-band emission mask, interference power on a subchannel resource $R_{RX,1}$ that does not overlap $R_{RX}$ in frequency domain, where the interference power is greater than or equal to a first threshold.

(c): Subchannel resources $R_{RX,1}$ and $R_{x,y+j \times P'_{rsvp\_TX}}$ in the slot $t'^{SL}_{m+q \times P'_{rsvp\_RX}}$ overlap. $q$ is a positive integer that ensures that the slot $t'^{SL}_{m+q \times P'_{rsvp\_RX}}$ is located in the selection window $[n+T_1, n+T_2]$. $0 \leq j \leq C_{resel}-1$.

Step (7): If a quantity of remaining single slot candidate resources in the initial single slot candidate resource set $S_A$ is less than $X \cdot M_{total}$, increase each RSRP threshold in the threshold $Th(prio_{RX}, prio_{TX})$ by 3 dB, and return to step (4) to continue to perform the procedure. If the quantity of remaining single slot candidate resources in $S_A$ is greater than $X \cdot M_{total}$, $S_A$ is reported to the higher layer. Herein, $X$ is a number that is greater than 0 and less than 1 and that is configured by the higher layer.

For step (1) to step (6) and step (7), refer to the foregoing related descriptions. Details are not described herein again. In other words, compared with an existing step, step (6b) is added to the resource selection steps in Mode 2 provided in this application.

For a relationship between step (5) and step (6), refer to the foregoing related description. Details are not described herein again. For step (6) and step (6b), the terminal may first perform step (6) and perform step (6b) when the three conditions in step (6) are not all met; or the terminal may first perform step (6b) and perform step (6) when the three conditions in step (6b) are not all met. An execution sequence of step (6) and step (6b) is not specifically limited in this application.

In addition to the resource selection method shown in FIG. 6, this application further provides another resource selection method. As shown in FIG. 11, the method includes the following steps.

S1101: A first terminal determines a candidate resource set.

Optionally, the candidate resource set may include a resource in a selection window in an SL resource pool. Refer to related descriptions in step (2) and step (4) above, and details are not described herein again.

The candidate resource set does not include a fourth resource. Signal received power on a fifth resource associated with the fourth resource is greater than or equal to a third threshold.

The fifth resource is a resource in a sensing window, and the fifth resource carries a PSCCH of a second terminal and/or a PSSCH scheduled by the PSCCH. The received power on the fifth resource is received power of the PSCCH of the second terminal and/or received power of the PSSCH scheduled by the PSCCH.

A time domain location of a periodic extension resource of the fifth resource overlaps a time domain location of a resource set corresponding to the fourth resource. A spacing between a frequency domain location of the fifth resource and a frequency domain location of the fourth resource is less than a fourth threshold.

The periodic extension resource of the fifth resource is determined based on the fifth resource and a first period of the second terminal. For example, a frequency domain location of the periodic extension resource of the fifth resource overlaps the frequency domain location of the fifth resource, and the time domain period is the first period.

Optionally, the first period of the second terminal is a period in which the second terminal reserves a resource. The PSCCH of the second terminal carried on the fifth resource may carry 1st-stage SCI, and the 1st-stage SCI may indicate the first period of the second terminal.

Optionally, the resource set corresponding to the fourth resource includes the fourth resource and/or a periodic extension resource of the fourth resource, and the periodic extension resource of the fourth resource is determined based on the fourth resource and a second period of the first terminal. For example, a frequency domain location of the periodic extension resource of the fourth resource overlaps the frequency domain location of the fourth resource, and the time domain period is the second period. The second period of the first terminal is a period in which the first terminal reserves a resource, and the second period may be configured by using the higher layer parameter.

Optionally, the third threshold may be related to a first priority and a second priority. The first priority is a priority indicated by the 1st-stage SCI carried on the PSCCH of the second terminal and carried on the fifth resource. The second priority is a priority of a TB to be transmitted by the first terminal, and the second priority may be configured by the higher layer.

Optionally, a spacing between the frequency domain location of the fifth resource and the frequency domain location of the fourth resource may be represented in a unit of an RE, or may be represented in a unit of a subchannel. This is not specifically limited in this application.

Optionally, after determining the candidate resource set, the first terminal may perform the following step S1102.

S1102: Perform data transmission by using a resource in the candidate resource set. Refer to related descriptions in step S602. Details are not described herein again.

It may be understood that, in actual application, the first terminal may select a resource with reference to the method shown in FIG. 11 and an existing Mode 2 resource selection method.

Based on the solution provided in this application, when the terminal determines the candidate resource set, if the received power on the fifth resource in the sensing window is large, and the periodic extension resource of the fifth resource overlaps the time domain location of the resource set corresponding to the fourth resource, the candidate resource set does not include a fourth resource that has a small frequency domain spacing with the fifth resource, so that interference on a resource finally determined by the terminal for data transmission is small or does not exist, thereby improving data transmission reliability.

It should be noted that the signal received power in this application may be represented in a plurality of forms, for example, may be represented by using RSRP, a received signal strength indication (received signal strength indication, RSSI), or the like. This is not limited.

It may be understood that, in the foregoing embodiments, the method and/or the step implemented by the network device may be implemented by a component (for example, a processor, a chip, a chip system, a circuit, a logic module, or software such as a chip or a circuit) that can be used in the network device; or the method and/or the step implemented by the terminal may be implemented by a component (for example, a processor, a chip, a chip system, a circuit, a logic module, or software such as a chip or a circuit) that can be used in the terminal.

The foregoing mainly describes the solutions provided in this application. Correspondingly, this application further provides a communication apparatus, and the communication apparatus is configured to implement the foregoing methods. The communication apparatus may be the first terminal in the foregoing method embodiments, or an apparatus including the foregoing first terminal device, or a component that can be used in the first terminal, for example, a chip or a chip system.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

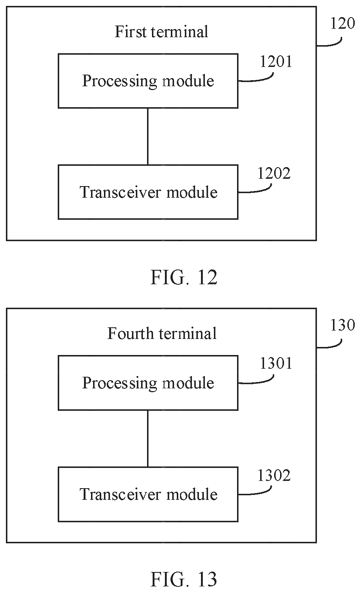

Optionally, an example in which the communication apparatus is the first terminal in the foregoing method embodiments is used. FIG. 12 is a diagram of a structure of a first terminal 120. The first terminal 120 includes a processing module 1201. Optionally, the first terminal may further include a transceiver module 1202.

In some embodiments, the first terminal 120 may further include a storage module (not shown in FIG. 12), configured to store program instructions and data.

In some embodiments, the transceiver module 1202 may also be referred to as a transceiver unit, and is configured to implement a sending function and/or a receiving function. The transceiver module 1202 may include a transceiver circuit, a transceiver machine, a transceiver, or a communication interface.

In some embodiments, the transceiver module 1202 may include a receiving module and a sending module, respectively configured to perform receiving-type steps and sending-type steps performed by the first terminal in the foregoing method embodiments, and/or configured to support another process of the technology described in this specification; and the processing module 1201 may be configured to perform processing-type (for example, determining and exclusion) steps performed by the first terminal in the foregoing method embodiments, and/or configured to support another process of the technology described in this specification.

The processing module 1201 is configured to determine a candidate resource set, where the candidate resource set does not include a first resource, and interference power on a second resource associated with the first resource is greater than or equal to a first threshold. A periodic extension resource of the second resource overlaps a resource set corresponding to the first resource, and the periodic extension resource of the second resource is determined based on the second resource and a first period of a second terminal. A time domain location of the second resource overlaps a time domain location of a third resource, and a frequency domain location of the second resource does not overlap a frequency domain location of the third resource. Interference power on the second resource is determined based on power that a signal carried on the third resource leaks on the second resource. The third resource is a resource in a sensing window, and the signal carried on the third resource is a PSCCH of the second terminal and/or a PSSCH scheduled by the PSCCH.

Optionally, the resource set corresponding to the first resource includes the first resource and/or periodic extension resource of the first resource, and the periodic extension resource of the first resource is determined based on the first resource and a second period of first terminal.

Optionally, that interference power on the second resource is determined based on power that a signal carried on the third resource leaks on the second resource includes: The interference power on the second resource is determined based on the power that the signal carried on the third resource leaks on the second resource, and signal received power of a PSCCH of a third terminal carried on the second resource and/or signal received power of a PSSCH scheduled by the PSCCH.

Optionally, that the periodic extension resource of the second resource is determined based on the second resource and a first period of a second terminal includes: the periodic extension resource of the second resource is determined based on the second resource, the first period of the second terminal, and a third period of the third terminal, where the second resource is used to carry the PSCCH of the third terminal and/or the PSSCH scheduled by the PSCCH.

Optionally, the power that the signal carried on the third resource leaks on the second resource is signal received power on a first channel state information interference measurement CSI-IM resource, and the first CSI-IM resource is located on the second resource.

Optionally, the transceiver module 1202 is configured to receive first configuration information from a third terminal, where the first configuration information is used to configure a first CSI-IM resource on the second resource. Alternatively, the transceiver module 1202 is configured to receive second configuration information from a network device, where the second configuration information is used to configure a periodic CSI-IM resource, a period of the periodic CSI-IM resource is N slots, the periodic CSI-IM resource includes the first CSI-IM resource, and N is a positive integer.

Optionally, the CSI-IM resource is located on a symbol other than a guard symbol, and the CSI-IM resource is not used for PSSCH transmission or PSCCH transmission.

Optionally, the power that the signal carried on the third resource leaks on the second resource is determined based on signal received power on the third resource and an in-band emission mask, and the signal received power on the third resource is determined based on signal received power of the PSCCH of the second terminal and/or signal received power of the PSSCH scheduled by the PSCCH.

Optionally, the signal received power on the third resource is the signal received power of the PSCCH of the second terminal; or the signal received power on the third resource is the signal received power of the PSSCH scheduled by the PSCCH; or the signal received power on the third resource is a maximum value of the signal received power of the PSCCH of the second terminal and the signal received power of the PSSCH scheduled by the PSCCH; or the signal received power on the third resource is a minimum value of the signal received power of the PSCCH of the second terminal and the signal received power of the PSSCH scheduled by the PSCCH; or the signal received power on the third resource is an average value of the signal received power of the PSCCH of the second terminal and the signal received power of the PSSCH scheduled by the PSCCH.

Optionally, the transceiver module 1202 is further configured to receive indication information from a fourth terminal, where the indication information indicates the interference power on the second resource.

Optionally, the transceiver module 1202 is further configured to perform data transmission by using a resource in the candidate resource set.

Optionally, the second terminal and the first terminal share a same sidelink resource pool, and/or a distance between the second terminal and the first terminal is less than or equal to a second threshold.

All related content of the steps in the foregoing method embodiments may be cited in function descriptions of the corresponding functional modules. Details are not described herein again.

In this application, the first terminal 120 is presented in a form of function modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another component that can provide the foregoing functions.

In some embodiments, in hardware implementation, a person skilled in the art may figure out that the first terminal 120 may use a form of the communication apparatus 50 shown in FIG. 5.

In an example, a function/implementation process of the processing module 1201 in FIG. 12 may be implemented by the processor 501 in the communication apparatus 50 shown in FIG. 5 by invoking the computer-executable instructions stored in the memory 503. A function/implementation process of the transceiver module 1202 in FIG. 12 may be implemented by using the communication interface 504 in the communication apparatus 50 shown in FIG. 5.

In some embodiments, when the first terminal 120 in FIG. 12 is a chip or a chip system, a function/implementation process of the transceiver module 1202 may be implemented by using an input/output interface (or a communication interface) of the chip or the chip system, and a function/implementation process of the processing module 1201 may be implemented by using a processor (or a processing circuit) of the chip or the chip system.

The first terminal 120 provided in this embodiment can perform the foregoing method. Therefore, for technical effect that can be achieved by the first terminal 120, refer to the foregoing method embodiment. Details are not described herein again.

Optionally, an example in which the communication apparatus is the fourth terminal in the foregoing method embodiments is used. FIG. 13 is a diagram of a structure of a fourth terminal 130. The fourth terminal 130 includes a processing module 1301. Optionally, the fourth terminal may further include a transceiver module 1302.

In some embodiments, the fourth terminal 130 may further include a storage module (not shown in FIG. 13), configured to store program instructions and data.

In some embodiments, the transceiver module 1302 may also be referred to as a transceiver unit, and is configured to implement a sending function and/or a receiving function. The transceiver module 1302 may include a transceiver circuit, a transceiver machine, a transceiver, or a communication interface.

In some embodiments, the transceiver module 1302 may include a receiving module and a sending module, respectively configured to perform receiving-type steps and sending-type steps performed by the fourth terminal in the foregoing method embodiments, and/or configured to support another process of the technology described in this specification; and the processing module 1301 may be configured to perform processing-type (for example, determining and exclusion) steps performed by the fourth terminal in the foregoing method embodiments, and/or configured to support another process of the technology described in this specification.

The processing module 1301 is configured to determine interference power on a second resource. The transceiver module 1302 is configured to send indication information to a first terminal, where the indication information indicates the interference power on the second resource. A time domain location of the second resource overlaps a time domain location of a third resource, and a frequency domain location of the second resource does not overlap a frequency domain location of the third resource. The third resource is a resource in the sensing window, the interference power on the second resource is determined based on power that a signal carried on the third resource leaks on the second resource, and the signal carried on the third resource is a PSCCH of the second terminal and/or a PSSCH scheduled by the PSCCH.

Optionally, that interference power on the second resource is determined based on power that a signal carried on the third resource leaks on the second resource includes: The interference power on the second resource is determined based on the power that the signal carried on the third resource leaks on the second resource, and signal received power of a PSCCH of a third terminal carried on the second resource and/or signal received power of a PSSCH scheduled by the PSCCH.

Optionally, the power that the signal carried on the third resource leaks on the second resource is signal received power on a first channel state information interference measurement CSI-IM resource, and the first CSI-IM resource is located on the second resource.

Optionally, the transceiver module 1302 is further configured to receive first configuration information from a third terminal, where the first configuration information is used to configure a first CSI-IM resource on the second resource. Alternatively, the transceiver module 1302 is further configured to receive second configuration information from a network device, where the second configuration information is used to configure a periodic CSI-IM resource, a period of the periodic CSI-IM resource is N slots, the periodic CSI-IM resource includes the first CSI-IM resource, and N is a positive integer.

Optionally, the CSI-IM resource is located on a symbol other than a guard symbol, and the CSI-IM resource is not used for PSSCH transmission or PSCCH transmission.

Optionally, the power that the signal carried on the third resource leaks on the second resource is determined based on signal received power on the third resource and an in-band emission mask, and the signal received power on the third resource is determined based on signal received power of the PSCCH of the second terminal and/or signal received power of the PSSCH scheduled by the PSCCH.

Optionally, the signal received power on the third resource is the signal received power of the PSCCH of the second terminal; or the signal received power on the third resource is the signal received power of the PSSCH scheduled by the PSCCH; or the signal received power on the third resource is a maximum value of the signal received power of the PSCCH of the second terminal and the signal received power of the PSSCH scheduled by the PSCCH; or the signal received power on the third resource is a minimum value of the signal received power of the PSCCH of the second terminal and the signal received power of the PSSCH scheduled by the PSCCH; or the signal received power on the third resource is an average value of the signal received power of the PSCCH of the second terminal and the signal received power of the PSSCH scheduled by the PSCCH.

All related content of the steps in the foregoing method embodiments may be cited in function descriptions of the corresponding functional modules. Details are not described herein again.

In this application, the fourth terminal 130 is presented in a form of function modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another component that can provide the foregoing functions.

In some embodiments, in hardware implementation, a person skilled in the art may figure out that the fourth terminal 130 may use a form of the communication apparatus 50 shown in FIG. 5.

In an example, a function/implementation process of the processing module 1301 in FIG. 13 may be implemented by the processor 501 in the communication apparatus 50 shown in FIG. 5 by invoking the computer-executable instructions stored in the memory 503. A function/implementation process of the transceiver module 1302 in FIG. 13 may be implemented by using the communication interface 504 in the communication apparatus 50 shown in FIG. 5.

In some embodiments, when the fourth terminal 130 in FIG. 13 is a chip or a chip system, a function/implementation process of the transceiver module 1302 may be implemented by using an input/output interface (or a communication interface) of the chip or the chip system, and a function/implementation process of the processing module 1301 may be implemented by using a processor (or a processing circuit) of the chip or the chip system.

The fourth terminal 130 provided in this embodiment can perform the foregoing method. Therefore, for technical effect that can be achieved by the fourth terminal 130, refer to the foregoing method embodiment. Details are not described herein again.

In a possible product form, the first terminal or the fourth terminal in embodiments of this application may be further implemented through the following: one or more field programmable gate arrays (field programmable gate arrays, FPGAs), programmable logic devices (programmable logic devices, PLDs), controllers, state machines, gate logic, discrete hardware components, any other suitable circuitry, or any combination of circuits capable of performing various functions described throughout this application.

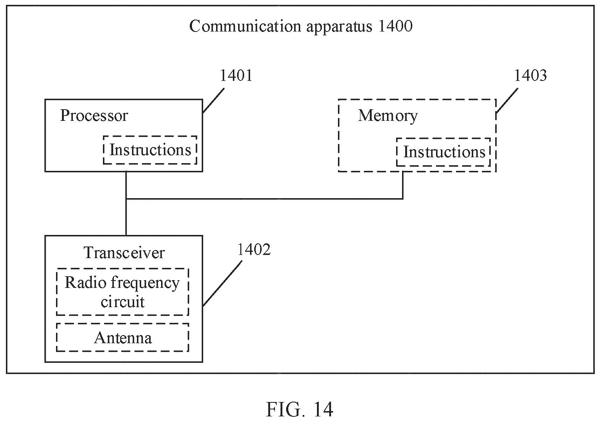

In another possible product form, the first terminal or the fourth terminal in embodiments of this application may be implemented by using a general bus architecture. For ease of description, FIG. 14 is a diagram of a structure of a communication apparatus 1400 according to an embodiment of this application. The communication apparatus 1400 includes a processor 1401 and a transceiver 1402. The communication apparatus 1400 may be a first terminal device or a chip in the first terminal device. FIG. 14 shows only main components of the communication apparatus 1400. In addition to a processor 1401 and a transceiver 1402, the communication apparatus may further include a memory 1403 and an input/output apparatus (not shown in the figure).

The processor 1401 is mainly configured to: process a communication protocol and communication data, control the communication apparatus, execute a software program, and process data of the software program. The memory 1403 is mainly configured to store the software program and data. The transceiver 1402 may include a radio frequency circuit and an antenna. The radio frequency circuit is mainly configured to perform conversion between a baseband signal and a radio frequency signal and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

The processor 1401, the transceiver 1402, and the memory 1403 may be connected through a communication bus.

After the communication apparatus is powered on, the processor 1401 may read the software program in the memory 1403, interpret and execute instructions of the software program, and process data of the software program. When data needs to be sent in a wireless manner, after performing baseband processing on the to-be-sent data, the processor 1401 outputs a baseband signal to the radio frequency circuit. After performing radio frequency processing on the baseband signal, the radio frequency circuit sends a radio frequency signal in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 1401. The processor 1401 converts the baseband signal into data and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any foregoing method embodiment. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or the instructions are executed by a computer, functions in any foregoing method embodiment are implemented.

This application further provides a computer program product. When the computer program product is executed by a computer, functions of any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that the system, apparatuses, and methods described in this application may alternatively be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may be physically separated or not, this is, may be located together in the same place or distributed on a plurality of network units. Parts displayed as units may be or may be not physical units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

**Claims**

1. A resource selection method, wherein the method is applied to a first communication apparatus (120), and the method comprises:

   determining (S601) a candidate resource set, wherein the candidate resource set does not comprise a first resource, and interference power on a second resource associated with the first resource is greater than or equal to a first threshold; and

a periodic extension resource of the second resource overlaps a resource set corresponding to the first resource, the periodic extension resource of the second resource is determined based on the second resource and a first period of a second communication apparatus, a time domain location of the second resource overlaps a time domain location of a third resource, a frequency domain location of the second resource does not overlap a frequency domain location of the third resource, interference power on the second resource is determined based on power that a signal carried on the third resource leaks on the second resource, the third resource is a resource in a sensing window, and the signal carried on the third resource is a physical sidelink control channel, PSCCH, of the second communication apparatus and/or a physical sidelink shared channel, PSSCH, scheduled by the PSCCH;

wherein that the periodic extension resource of the second resource is determined based on the second resource and a first period of a second communication apparatus comprises that:

the periodic extension resource of the second resource is determined only based on the second resource and the first period of the second communication apparatus wherein a frequency domain location of the periodic extension resource of the second resource overlaps a frequency domain location of the second resource, and a time domain period of the second resource is the first period; or

the periodic extension resource of the second resource is determined based on the second resource, the first period of the second communication apparatus, and a third period of a third communication apparatus, wherein the second resource is used to carry the PSCCH of the third communication apparatus and/or the PSSCH scheduled by the PSCCH, and wherein the periodic extension resource of the second resource is a union set of resources obtained by extending the second resource based on the first period of the second communication apparatus and resources obtained by extending the second resource based on the third period of the third communication apparatus or the periodic extension resource of the second resource is a resource obtained by extending the second resource based on a least common multiple of the first period and the third period; wherein the first period of the second communication apparatus is a period in which the second communication apparatus reserves a resource, and the third period of the third communication apparatus is a period in which the third communication apparatus reserves a resource.

2. The method according to claim 1, wherein the resource set corresponding to the first resource comprises the first resource and/or a periodic extension resource of the first resource, and the periodic extension resource of the first resource is determined based on the first resource and a second period of the first communication apparatus, and wherein the second period of the first communication apparatus is a period in which the first communication apparatus reserves a resource.

3. The method according to claim 1 or 2, wherein that interference power on the second resource is determined based on power that a signal carried on the third resource leaks on the second resource comprises:
the interference power on the second resource is determined based on the power that the signal carried on the third resource leaks on the second resource, and signal received power of a PSCCH of the third communication apparatus carried on the second resource and/or signal received power of a PSSCH scheduled by the PSCCH.

4. The method according to any one of claims 1 to 3, wherein the power that the signal carried on the third resource leaks on the second resource is signal received power on a first channel state information interference measurement, CSI-IM, resource, and the first CSI-IM resource is located on the second resource.

5. The method according to claim 4, wherein the method further comprises:

receiving first configuration information from the third communication apparatus, wherein the first configuration information is used to configure the first CSI-IM resource on the second resource; or
receiving second configuration information from a network device, wherein the second configuration information is used to configure a periodic CSI-IM resource, a period of the periodic CSI-IM resource is N slots, the periodic CSI-IM resource comprises the first CSI-IM resource, and N is a positive integer.

6. The method according to claim 4 or 5, wherein the CSI-IM resource is located on a symbol other than a guard symbol, and the CSI-IM resource is not used for PSSCH transmission or PSCCH transmission.

**7.** The method according to any one of claims 1 to 6, wherein the power that the signal carried on the third resource leaks on the second resource is determined based on signal received power on the third resource and an in-band emission mask, and the signal received power on the third resource is determined based on signal received power of the PSCCH of the second communication apparatus and/or signal received power of the PSSCH scheduled by the PSCCH.

**8.** The method according to claim 7, wherein the signal received power on the third resource is the signal received power of the PSCCH of the second communication apparatus; or

the signal received power on the third resource is the signal received power of the PSSCH scheduled by the PSCCH; or
the signal received power on the third resource is a maximum value of the signal received power of the PSCCH of the second communication apparatus and the signal received power of the PSSCH scheduled by the PSCCH; or
the signal received power on the third resource is a minimum value of the signal received power of the PSCCH of the second communication apparatus and the signal received power of the PSSCH scheduled by the PSCCH; or
the signal received power on the third resource is an average value of the signal received power of the PSCCH of the second communication apparatus and the signal received power of the PSSCH scheduled by the PSCCH.

**9.** The method according to any one of claims 1 to 8, wherein the method further comprises:
receiving indication information from a fourth communication apparatus, wherein the indication information indicates the interference power on the second resource.

**10.** The method according to any one of claims 1 to 9, wherein the second communication apparatus and the first communication apparatus share a same sidelink resource pool, and/or a distance between the second communication apparatus and the first communication apparatus is less than or equal to a second threshold.

**11.** A first communication apparatus (120), wherein the first communication apparatus comprises a processing module (1201);

the processing module is configured to determine a candidate resource set, wherein the candidate resource set does not comprise a first resource, and interference power on a second resource associated with the first resource is greater than or equal to a first threshold; and
a periodic extension resource of the second resource overlaps a resource set corresponding to the first resource, the periodic extension resource of the second resource is determined based on the second resource and a first period of a second communication apparatus, a time domain location of the second resource overlaps a time domain location of a third resource, a frequency domain location of the second resource does not overlap a frequency domain location of the third resource, interference power on the second resource is determined based on power that a signal carried on the third resource leaks on the second resource, the third resource is a resource in a sensing window, and the signal carried on the third resource is a physical sidelink control channel, PSCCH, of the second communication apparatus and/or a physical sidelink shared channel, PSSCH, scheduled by the PSCCH;
wherein that the periodic extension resource of the second resource is determined based on the second resource and a first period of a second communication apparatus comprises that:

the periodic extension resource of the second resource is determined only based on the second resource and the first period of the second communication apparatus, wherein a frequency domain location of the periodic extension resource of the second resource overlaps a frequency domain location of the second resource, and a time domain period of the second resource is the first period; or
the periodic extension resource of the second resource is determined based on the second resource, the first period of the second communication apparatus, and a third period of a third communication apparatus, wherein the second resource is used to carry the PSCCH of the third communication apparatus and/or the PSSCH scheduled by the PSCCH, and wherein the periodic extension resource of the second resource is a union set of resources obtained by extending the second resource based on the first period of the second communication apparatus and resources obtained by extending the second resource based on the third period of the third communication apparatus, or the periodic extension resource of the second resource is a resource obtained by extending the second resource based on a least common multiple of the first period and the third period;

wherein the first period of the second communication apparatus is a period in which the second communication apparatus reserves a resource, and the third period of the third communication apparatus is a period in which the third communication apparatus reserves a resource.

12. The first communication apparatus according to claim 11, wherein the resource set corresponding to the first resource comprises the first resource and/or a periodic extension resource of the first resource, and the periodic extension resource of the first resource is determined based on the first resource and a second period of the first communication apparatus, and wherein the second period of the first communication apparatus is a period in which the first communication apparatus reserves a resource.

13. The first communication apparatus according to claim 11 or 12, wherein that interference power on the second resource is determined based on power that a signal carried on the third resource leaks on the second resource comprises: the interference power on the second resource is determined based on the power that the signal carried on the third resource leaks on the second resource, and signal received power of a PSCCH of the third communication apparatus carried on the second resource and/or signal received power of a PSSCH scheduled by the PSCCH.

**Patentansprüche**

1. Ressourcenauswahlverfahren, wobei das Verfahren auf eine erste Kommunikationsvorrichtung (120) angewandt wird und das Verfahren Folgendes umfasst:

Bestimmen (S601) eines in Betracht kommenden Ressourcensatzes, wobei der in Betracht kommende Ressourcensatz eine erste Ressource nicht umfasst und eine Interferenzleistung auf einer zweiten Ressource, die der ersten Ressource zugeordnet ist, größer als oder gleich einem ersten Schwellenwert ist; und eine periodische Erweiterungsressource der zweiten Ressource einen Ressourcensatz überlappt, welcher der ersten Ressource entspricht, die periodische Erweiterungsressource der zweiten Ressource basierend auf der zweiten Ressource und einer ersten Periode einer zweiten Kommunikationsvorrichtung bestimmt wird, ein Zeitdomänenort der zweiten Ressource einen Zeitdomänenort einer dritten Ressource überlappt, ein Frequenzdomänenort der zweiten Ressource einen Frequenzdomänenort der dritten Ressource nicht überlappt, die Interferenzleistung auf der zweiten Ressource basierend auf einer Leistung bestimmt wird, die ein Signal, das auf der dritten Ressource getragen wird, auf der zweiten Ressource abgibt, die dritte Ressource eine Ressource in einem Erfassungsfenster ist und das Signal, das auf der dritten Ressource getragen wird, ein physikalischer Sidelink-Steuerungskanal, PSCCH, der zweiten Kommunikationsvorrichtung und/oder ein gemeinsam genutzter physikalischer Sidelink-Kanal, PSSCH, ist, der durch den PSCCH geplant wird;

wobei, dass die periodische Erweiterungsressource der zweiten Ressource basierend auf der zweiten Ressource und einer ersten Periode einer zweiten Kommunikationsvorrichtung bestimmt wird, umfasst, dass:

die periodische Erweiterungsressource der zweiten Ressource nur basierend auf der zweiten Ressource und der ersten Periode der zweiten Kommunikationsvorrichtung bestimmt wird, wobei ein Frequenzdomänenort der periodischen Erweiterungsressource der zweiten Ressource einen Frequenzdomänenort der zweiten Ressource überlappt und eine Zeitdomänenperiode der zweiten Ressource die erste Periode ist; oder

die periodische Erweiterungsressource der zweiten Ressource basierend auf der zweiten Ressource, der ersten Periode der zweiten Kommunikationsvorrichtung und einer dritten Periode einer dritten Kommunikationsvorrichtung bestimmt wird, wobei die zweite Ressource dazu verwendet wird, den PSCCH der dritten Kommunikationsvorrichtung und/oder den PSSCH, der durch den PSCCH geplant wird, zu tragen, und wobei die periodische Erweiterungsressource der zweiten Ressource ein Vereinigungssatz von Ressourcen, die durch Erweitern der zweiten Ressource basierend auf der ersten Periode der zweiten Kommunikationsvorrichtung erlangt werden, und Ressourcen, die durch Erweitern der zweiten Ressource basierend auf der dritten Periode der dritten Kommunikationsvorrichtung erlangt werden, ist oder die periodische Erweiterungsressource der zweiten Ressource eine Ressource ist, die durch Erweitern der zweiten Ressource basierend auf einem kleinsten gemeinsamen Vielfachen der ersten Periode und der dritten Periode erlangt wird;

wobei die erste Periode der zweiten Kommunikationsvorrichtung eine Periode ist, in der die zweite Kommunikationsvorrichtung eine Ressource reserviert, und die dritte Periode der dritten Kommunikationsvorrichtung eine Periode ist, in der die dritte Kommunikationsvorrichtung eine Ressource reserviert.

2. Verfahren nach Anspruch 1, wobei der Ressourcensatz, welcher der ersten Ressource entspricht, die erste Ressource und/oder eine periodische Erweiterungsressource der ersten Ressource umfasst und die periodische Erweiterungsressource der ersten Ressource basierend auf der ersten Ressource und einer zweiten Periode der ersten Kommunikationsvorrichtung bestimmt wird und wobei die zweite Periode der ersten Kommunikationsvorrichtung eine Periode ist, in der die erste Kommunikationsvorrichtung eine Ressource reserviert.

3. Verfahren nach Anspruch 1 oder 2, wobei, dass die Interferenzleistung auf der zweiten Ressource basierend auf einer Leistung bestimmt wird, die ein Signal, das auf der dritten Ressource getragen wird, auf der zweiten Ressource abgibt, Folgendes umfasst:
die Interferenzleistung auf der zweiten Ressource wird basierend auf der Leistung, die das Signal, das auf der dritten Ressource getragen wird, auf der zweiten Ressource abgibt, und einer Signalempfangsleistung eines PSCCH der dritten Kommunikationsvorrichtung, die auf der zweiten Ressource getragen wird, und/oder einer Signalempfangsleistung eines PSSCH, der durch den PSCCH geplant wird, bestimmt.

4. Verfahren nach einem der Ansprüche 1 bis 3, wobei die Leistung, die das Signal, das auf der dritten Ressource getragen wird, auf der zweiten Ressource abgibt, eine Signalempfangsleistung auf einer ersten Kanalzustandsinformationsinterferenzmessungsressource, CSI-IM-Ressource, ist und sich die erste CSI-IM-Ressource auf der zweiten Ressource befindet.

5. Verfahren nach Anspruch 4, wobei das Verfahren ferner Folgendes umfasst:

Empfangen erster Konfigurationsinformationen von der dritten Kommunikationsvorrichtung, wobei die ersten Konfigurationsinformationen dazu verwendet werden, die erste CSI-IM-Ressource auf der zweiten Ressource zu konfigurieren; oder
Empfangen zweiter Konfigurationsinformationen von einer Netzvorrichtung, wobei die zweiten Konfigurationsinformationen dazu verwendet werden, eine periodische CSI-IM-Ressource zu konfigurieren, eine Periode der periodischen CSI-IM-Ressource N Schlitze beträgt, die periodische CSI-IM-Ressource die erste CSI-IM-Ressource umfasst und N eine positive Ganzzahl ist.

6. Verfahren nach Anspruch 4 oder 5, wobei sich die CSI-IM-Ressource auf einem anderen Symbol als einem Schutzsymbol befindet und die CSI-IM-Ressource nicht zur PSSCH-Übertragung oder PSCCH-Übertragung verwendet wird.

7. Verfahren nach einem der Ansprüche 1 bis 6, wobei die Leistung, die das Signal, das auf der dritten Ressource getragen wird, auf der zweiten Ressource abgibt, basierend auf einer Signalempfangsleistung auf der dritten Ressource und einer In-Band-Emissionsmaske bestimmt wird und die Signalempfangsleistung auf der dritten Ressource basierend auf der Signalempfangsleistung des PSCCH der zweiten Kommunikationsvorrichtung und/oder der Signalempfangsleistung des PSSCH, der durch den PSCCH geplant wird, bestimmt wird.

8. Verfahren nach Anspruch 7, wobei die Signalempfangsleistung auf der dritten Ressource die Signalempfangsleistung des PSCCH der zweiten Kommunikationsvorrichtung ist; oder

die Signalempfangsleistung auf der dritten Ressource die Signalempfangsleistung des PSSCH ist, der durch den PSCCH geplant wird; oder
die Signalempfangsleistung auf der dritten Ressource ein Maximalwert der Signalempfangsleistung des PSCCH der zweiten Kommunikationsvorrichtung und der Signalempfangsleistung des PSSCH ist, der durch den PSCCH geplant wird; oder
die Signalempfangsleistung auf der dritten Ressource ein Minimalwert der Signalempfangsleistung des PSCCH der zweiten Kommunikationsvorrichtung und der Signalempfangsleistung des PSSCH ist, der durch den PSCCH geplant wird; oder
die Signalempfangsleistung auf der dritten Ressource ein Durchschnittswert der Signalempfangsleistung des PSCCH der zweiten Kommunikationsvorrichtung und der Signalempfangsleistung des PSSCH ist, der durch den PSCCH geplant wird.

9. Verfahren nach einem der Ansprüche 1 bis 8, wobei das Verfahren ferner Folgendes umfasst:
Empfangen von Angabeinformationen von einer vierten Kommunikationsvorrichtung, wobei die Angabeinformationen die Interferenzleistung auf der zweiten Ressource angeben.

**10.** Verfahren nach einem der Ansprüche 1 bis 9, wobei die zweite Kommunikationsvorrichtung und die erste Kommunikationsvorrichtung einen gleichen Sidelink-Ressourcenpool gemeinsam nutzen und/oder ein Abstand zwischen der zweiten Kommunikationsvorrichtung und der ersten Kommunikationsvorrichtung kleiner als oder gleich einem zweiten Schwellenwert ist.

**11.** Erste Kommunikationsvorrichtung (120), wobei die erste Kommunikationsvorrichtung ein Verarbeitungsmodul (1201) umfasst;

das Verarbeitungsmodul dazu konfiguriert ist, einen in Betracht kommenden Ressourcensatz zu bestimmen, wobei der in Betracht kommende Ressourcensatz eine erste Ressource nicht umfasst und eine Interferenzleistung auf einer zweiten Ressource, die der ersten Ressource zugeordnet ist, größer als oder gleich einem ersten Schwellenwert ist; und
eine periodische Erweiterungsressource der zweiten Ressource einen Ressourcensatz überlappt, welcher der ersten Ressource entspricht, die periodische Erweiterungsressource der zweiten Ressource basierend auf der zweiten Ressource und einer ersten Periode einer zweiten Kommunikationsvorrichtung bestimmt wird, ein Zeitdomänenort der zweiten Ressource einen Zeitdomänenort einer dritten Ressource überlappt, ein Frequenzdomänenort der zweiten Ressource einen Frequenzdomänenort der dritten Ressource nicht überlappt, die Interferenzleistung auf der zweiten Ressource basierend auf einer Leistung bestimmt wird, die ein Signal, das auf der dritten Ressource getragen wird, auf der zweiten Ressource abgibt, die dritte Ressource eine Ressource in einem Erfassungsfenster ist und das Signal, das auf der dritten Ressource getragen wird, ein physikalischer Sidelink-Steuerungskanal, PSCCH, der zweiten Kommunikationsvorrichtung und/oder ein gemeinsam genutzter physikalischer Sidelink-Kanal, PSSCH, ist, der durch den PSCCH geplant wird;
wobei, dass die periodische Erweiterungsressource der zweiten Ressource basierend auf der zweiten Ressource und einer ersten Periode einer zweiten Kommunikationsvorrichtung bestimmt wird, umfasst, dass:

die periodische Erweiterungsressource der zweiten Ressource nur basierend auf der zweiten Ressource und der ersten Periode der zweiten Kommunikationsvorrichtung bestimmt wird,
wobei ein Frequenzdomänenort der periodischen Erweiterungsressource der zweiten Ressource einen Frequenzdomänenort der zweiten Ressource überlappt und eine Zeitdomänenperiode der zweiten Ressource die erste Periode ist; oder
die periodische Erweiterungsressource der zweiten Ressource basierend auf der zweiten Ressource, der ersten Periode der zweiten Kommunikationsvorrichtung und einer dritten Periode einer dritten Kommunikationsvorrichtung bestimmt wird, wobei die zweite Ressource dazu verwendet wird, den PSCCH der dritten Kommunikationsvorrichtung und/oder den PSSCH, der durch den PSCCH geplant wird, zu tragen, und wobei die periodische Erweiterungsressource der zweiten Ressource ein Vereinigungssatz von Ressourcen, die durch Erweitern der zweiten Ressource basierend auf der ersten Periode der zweiten Kommunikationsvorrichtung erlangt werden, und Ressourcen, die durch Erweitern der zweiten Ressource basierend auf der dritten Periode der dritten Kommunikationsvorrichtung erlangt werden, ist oder die periodische Erweiterungsressource der zweiten Ressource eine Ressource ist, die durch Erweitern der zweiten Ressource basierend auf einem kleinsten gemeinsamen Vielfachen der ersten Periode und der dritten Periode erlangt wird;
wobei die erste Periode der zweiten Kommunikationsvorrichtung eine Periode ist, in der die zweite Kommunikationsvorrichtung eine Ressource reserviert, und die dritte Periode der dritten Kommunikationsvorrichtung eine Periode ist, in der die dritte Kommunikationsvorrichtung eine Ressource reserviert.

**12.** Erste Kommunikationsvorrichtung nach Anspruch 11, wobei der Ressourcensatz, welcher der ersten Ressource entspricht, die erste Ressource und/oder eine periodische Erweiterungsressource der ersten Ressource umfasst und die periodische Erweiterungsressource der ersten Ressource basierend auf der ersten Ressource und einer zweiten Periode der ersten Kommunikationsvorrichtung bestimmt wird und wobei die zweite Periode der ersten Kommunikationsvorrichtung eine Periode ist, in der die erste Kommunikationsvorrichtung eine Ressource reserviert.

**13.** Erste Kommunikationsvorrichtung nach Anspruch 11 oder 12, wobei, dass die Interferenzleistung auf der zweiten Ressource basierend auf einer Leistung bestimmt wird, die ein Signal, das auf der dritten Ressource getragen wird, auf der zweiten Ressource abgibt, Folgendes umfasst:

die Interferenzleistung auf der zweiten Ressource wird basierend auf der Leistung, die das Signal, das auf der dritten Ressource getragen wird, auf der zweiten Ressource abgibt, und einer Signalempfangsleistung eines PSCCH der dritten Kommunikationsvorrichtung, die auf der zweiten Ressource getragen wird, und/oder einer Signalempfangsleistung eines PSSCH, der durch den PSCCH geplant wird, bestimmt.

**Revendications**

1. Procédé de sélection de ressources, dans lequel le procédé est appliqué à un premier appareil de communication (120), et le procédé comprend :

la détermination (S601) d'un ensemble de ressources candidates, dans lequel l'ensemble de ressources candidates ne comprend pas de première ressource, et une puissance d'interférence sur une deuxième ressource associée à la première ressource est supérieure ou égale à un premier seuil ; et

une ressource de prolongement périodique de la deuxième ressource chevauche un ensemble de ressources correspondant à la première ressource, la ressource de prolongement périodique de la deuxième ressource est déterminée sur la base de la deuxième ressource et d'une première période d'un deuxième appareil de communication, un emplacement de domaine temporel de la deuxième ressource chevauche un emplacement de domaine temporel d'une troisième ressource, un emplacement de domaine fréquentiel de la deuxième ressource ne chevauche pas un emplacement de domaine fréquentiel de la troisième ressource, une puissance d'interférence sur la deuxième ressource est déterminée sur la base d'une puissance qu'un signal transporté sur la troisième ressource fuit sur la deuxième ressource, la troisième ressource est une ressource dans une fenêtre de détection, et le signal transporté sur la troisième ressource est un canal de commande de liaison latérale physique, PSCCH, du deuxième appareil de communication et/ou un canal partagé de liaison latérale physique, PSSCH, planifié par le PSCCH ;

dans lequel le fait que la ressource de prolongement périodique de la deuxième ressource soit déterminée sur la base de la deuxième ressource et d'une première période d'un deuxième appareil de communication comprend le fait que :

la ressource de prolongement périodique de la deuxième ressource est déterminée uniquement sur la base de la deuxième ressource et de la première période du deuxième appareil de communication, dans lequel un emplacement de domaine fréquentiel de la ressource de prolongement périodique de la deuxième ressource chevauche un emplacement de domaine fréquentiel de la deuxième ressource, et une période de domaine temporel de la deuxième ressource est la première période ; ou

la ressource de prolongement périodique de la deuxième ressource est déterminée sur la base de la deuxième ressource, de la première période du deuxième appareil de communication et d'une troisième période d'un troisième appareil de communication, dans lequel la deuxième ressource est utilisée pour transporter le PSCCH du troisième appareil de communication et/ou le PSSCH planifié par le PSCCH, et dans lequel la ressource de prolongement périodique de la deuxième ressource est un ensemble d'union de ressources obtenues en prolongeant la deuxième ressource sur la base de la première période du deuxième appareil de communication et de ressources obtenues en prolongeant la deuxième ressource sur la base de la troisième période du troisième appareil de communication ou la ressource de prolongement périodique de la deuxième ressource est une ressource obtenue en prolongeant la deuxième ressource sur la base d'un plus petit commun multiple de la première période et de la troisième période ;

dans lequel la première période du deuxième appareil de communication est une période pendant laquelle le deuxième appareil de communication réserve une ressource, et la troisième période du troisième appareil de communication est une période pendant laquelle le troisième appareil de communication réserve une ressource.

2. Procédé selon la revendication 1, dans lequel l'ensemble de ressources correspondant à la première ressource comprend la première ressource et/ou une ressource de prolongement périodique de la première ressource, et la ressource de prolongement périodique de la première ressource est déterminée sur la base de la première ressource et d'une deuxième période du premier appareil de communication, et dans lequel la deuxième période du premier appareil de communication est une période pendant laquelle le premier appareil de communication réserve une ressource.

**3.** Procédé selon la revendication 1 ou 2, dans lequel le fait que la puissance d'interférence sur la deuxième ressource soit déterminée sur la base d'une puissance qu'un signal transporté sur la troisième ressource fuit sur la deuxième ressource comprend : la puissance d'interférence sur la deuxième ressource est déterminée sur la base de la puissance que le signal transporté sur la troisième ressource fuit sur la deuxième ressource, et d'une puissance reçue de signal d'un PSCCH du troisième appareil de communication transporté sur la deuxième ressource et/ou d'une puissance reçue de signal d'un PSSCH planifié par le PSCCH.

**4.** Procédé selon l'une quelconque des revendications 1 à 3, dans lequel la puissance que le signal transporté sur la troisième ressource fuit sur la deuxième ressource est une puissance reçue de signal sur une première ressource de mesure d'interférence d'informations d'état de canal, CSI-IM, et la première ressource CSI-IM est située sur la deuxième ressource.

**5.** Procédé selon la revendication 4, dans lequel le procédé comprend également :

la réception de premières informations de configuration provenant du troisième appareil de communication, dans lequel les premières informations de configuration sont utilisées pour configurer la première ressource CSI-IM sur la deuxième ressource ; ou la réception de secondes informations de configuration provenant d'un dispositif réseau, dans lequel les secondes informations de configuration sont utilisées pour configurer une ressource CSI-IM périodique, une période de la ressource CSI-IM périodique est de N intervalles, la ressource CSI-IM périodique comprend la première ressource CSI-IM, et N est un entier positif.

**6.** Procédé selon la revendication 4 ou 5, dans lequel la ressource CSI-IM est située sur un symbole autre qu'un symbole de garde, et la ressource CSI-IM n'est pas utilisée pour la transmission PSSCH ou la transmission PSCCH.

**7.** Procédé selon l'une quelconque des revendications 1 à 6, dans lequel la puissance que le signal transporté sur la troisième ressource fuit sur la deuxième ressource est déterminée sur la base d'une puissance reçue de signal sur la troisième ressource et d'un masque d'émission en bande, et la puissance reçue de signal sur la troisième ressource est déterminée sur la base d'une puissance reçue de signal du PSCCH du deuxième appareil de communication et/ou d'une puissance reçue de signal du PSSCH planifié par le PSCCH.

**8.** Procédé selon la revendication 7, dans lequel la puissance reçue de signal sur la troisième ressource est la puissance reçue de signal du PSCCH du deuxième appareil de communication ; ou

la puissance reçue de signal sur la troisième ressource est la puissance reçue de signal du PSSCH planifié par le PSCCH ; ou la puissance reçue de signal sur la troisième ressource est une valeur maximale de la puissance reçue de signal du PSCCH du deuxième appareil de communication et de la puissance reçue de signal du PSSCH planifié par le PSCCH ; ou la puissance reçue de signal sur la troisième ressource est une valeur minimale de la puissance reçue de signal du PSCCH du deuxième appareil de communication et la puissance reçue de signal du PSSCH planifié par le PSCCH ; ou la puissance reçue de signal sur la troisième ressource est une valeur moyenne de la puissance reçue de signal du PSCCH du deuxième appareil de communication et de la puissance reçue de signal du PSSCH planifié par le PSCCH.

**9.** Procédé selon l'une quelconque des revendications 1 à 8, dans lequel le procédé comprend également : la réception d'informations d'indication provenant d'un quatrième appareil de communication, dans lequel les informations d'indication indiquent la puissance d'interférence sur la deuxième ressource.

**10.** Procédé selon l'une quelconque des revendications 1 à 9, dans lequel le deuxième appareil de communication et le premier appareil de communication partagent une même réserve de ressources de liaison latérale, et/ou une distance entre le deuxième appareil de communication et le premier appareil de communication est inférieure ou égale à un second seuil.

**11.** Premier appareil de communication (120), dans lequel le premier appareil de communication comprend un module de traitement (1201) ;

le module de traitement est configuré pour déterminer un ensemble de ressources candidates, dans lequel l'ensemble de ressources candidates ne comprend pas de première ressource, et une puissance d'interférence sur une deuxième ressource associée à la première ressource est supérieure ou égale à un premier seuil ; et une ressource de prolongement périodique de la deuxième ressource chevauche un ensemble de ressources correspondant à la première ressource, la ressource de prolongement périodique de la deuxième ressource est déterminée sur la base de la deuxième ressource et d'une première période d'un deuxième appareil de communication, un emplacement de domaine temporel de la deuxième ressource chevauche un emplacement de domaine temporel d'une troisième ressource, un emplacement de domaine fréquentiel de la deuxième ressource ne chevauche pas un emplacement de domaine fréquentiel de la troisième ressource, une puissance d'interférence sur la deuxième ressource est déterminée sur la base d'une puissance qu'un signal transporté sur la troisième ressource fuit sur la deuxième ressource, la troisième ressource est une ressource dans une fenêtre de détection, et le signal transporté sur la troisième ressource est un canal de commande de liaison latérale physique, PSCCH, du deuxième appareil de communication et/ou un canal partagé de liaison latérale physique, PSSCH, planifié par le PSCCH ;

dans lequel le fait que la ressource de prolongement périodique de la deuxième ressource soit déterminée sur la base de la deuxième ressource et d'une première période d'un deuxième appareil de communication comprend le fait que :

la ressource de prolongement périodique de la deuxième ressource est déterminée uniquement sur la base de la deuxième ressource et de la première période du deuxième appareil de communication, dans lequel un emplacement de domaine fréquentiel de la ressource de prolongement périodique de la deuxième ressource chevauche un emplacement de domaine fréquentiel de la deuxième ressource, et une période de domaine temporel de la deuxième ressource est la première période ; ou
la ressource de prolongement périodique de la deuxième ressource est déterminée sur la base de la deuxième ressource, de la première période du deuxième appareil de communication et d'une troisième période d'un troisième appareil de communication, dans lequel la deuxième ressource est utilisée pour transporter le PSCCH du troisième appareil de communication et/ou le PSSCH planifié par le PSCCH, et dans lequel la ressource de prolongement périodique de la deuxième ressource est un ensemble d'union de ressources obtenues en prolongeant la deuxième ressource sur la base de la première période du deuxième appareil de communication et de ressources obtenues en prolongeant la deuxième ressource sur la base de la troisième période du troisième appareil de communication ou la ressource de prolongement périodique de la deuxième ressource est une ressource obtenue en prolongeant la deuxième ressource sur la base d'un plus petit commun multiple de la première période et de la troisième période ;

dans lequel la première période du deuxième appareil de communication est une période pendant laquelle le deuxième appareil de communication réserve une ressource, et la troisième période du troisième appareil de communication est une période pendant laquelle le troisième appareil de communication réserve une ressource.

12. Premier appareil de communication selon la revendication 11, dans lequel l'ensemble de ressources correspondant à la première ressource comprend la première ressource et/ou une ressource de prolongement périodique de la première ressource, et la ressource de prolongement périodique de la première ressource est déterminée sur la base de la première ressource et d'une deuxième période du premier appareil de communication, et dans lequel la deuxième période du premier appareil de communication est une période pendant laquelle le premier appareil de communication réserve une ressource.

13. Premier appareil de communication selon la revendication 11 ou 12, dans lequel le fait que la puissance d'interférence sur la deuxième ressource soit déterminée sur la base d'une puissance qu'un signal transporté sur la troisième ressource fuit sur la deuxième ressource comprend :
la puissance d'interférence sur la deuxième ressource est déterminée sur la base de la puissance que le signal transporté sur la troisième ressource fuit sur la deuxième ressource, et d'une puissance reçue de signal d'un PSCCH du troisième appareil de communication transporté sur la deuxième ressource et/ou d'une puissance reçue de signal d'un PSSCH planifié par le PSCCH.

| | |
|---|---|
| Guard | |
| PSSCH | |
| PSSCH | |
| DMRS | |
| PSSCH | |
| PSSCH | |
| DMRS | |
| PSSCH | |
| PSSCH | |
| DMRS | |
| PSSCH | PSCCH |
| PSSCH | |
| DMRS | |
| AGC | |

Slot

Symbol

FIG. 1

FIG. 2

FIG. 3

FIG. 4

FIG. 5

| S601 | A first terminal device determines a candidate resource set (excluding a first resource, and interference power on a second resource associated with the first resource is greater than or equal to a first threshold) |

| S602 | Perform data transmission by using a resource in the candidate resource set |

FIG. 6

FIG. 7

FIG. 8

CSI-IM resource

| | |
|---|---|
| Guard | |
| PSSCH | |
| PSSCH | |
| DMRS | |
| PSSCH | |
| PSSCH | |
| DMRS | |
| PSSCH | |
| PSSCH | |
| DMRS | |
| PSSCH | |
| PSSCH | PSCCH |
| DMRS | |
| AGC | |

Slot

Symbol

FIG. 9

Network
device

First
terminal

S601: Determine a candidate
resource set (excluding a
first resource)

Configuration information, used
to configure a CSI-IM resource
by using N slots as a period

S602: Perform data transmission by
using a resource in the candidate
resource set

FIG. 10

S1101

A first terminal device determines a candidate resource set
(excluding a fourth resource, and receive power on a fifth
resource associated with the fourth resource is greater than or
equal to a third threshold)

S1102

Perform data transmission by using a resource in the candidate
resource set

FIG. 11

First terminal 120

Processing module 1201

Transceiver module 1202

FIG. 12

Fourth terminal 130

Processing module 1301

Transceiver module 1302

FIG. 13

Communication apparatus 1400

1401

1403

Processor

Instructions

Memory

Instructions

Transceiver

1402

Radio frequency
circuit

Antenna

FIG. 14

**EP 4 432 592 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021007686 A1
- WO 2020173536 A1